# EUROPEAN PATENT APPLICATION

(11) **EP 4 553 758 A1**
(43) Date of publication of application: **14.05.2025**
(21) Application number: 23879937.3
(22) Date of filing: 06.07.2023
(51) Int. Cl.: G06T 5/50, G06T 7/194, G06T 7/11, G06T 11/60, G06T 7/90, G06N 3/08

(54) **METHOD AND ELECTRONIC DEVICE FOR GENERATING TRAINING DATA FOR LEARNING OF ARTIFICIAL INTELLIGENCE MODEL**

(30) Priority: 18.10.2022 KR 20220134453; 19.12.2022 KR 20220178691
(71) Applicant: Samsung Electronics Co., Ltd., Suwon-si, Gyeonggi-do 16677 (KR)
(72) Inventor: LEE, Sanghoon, Suwon-si, Gyeonggi-do 16677 (KR)
(74) Representative: Appleyard Lees IP LLP
(86) International application number: PCT/KR2023/009601
(87) International publication number: WO 2024/085352

(57) **Abstract**

Provided are a method and apparatus for generating training data, the method including obtaining a first image including an object corresponding to a subject of learning, obtaining a background image in which the object is not included based on a second image, captured at a same point of view as the first image, identifying a region of interest including the object in the first image, obtaining a region-of-interest image corresponding to the region of interest from the background image, determining first target training data corresponding to a context of the object from among existing original training data, determined based on a ratio between a width and a height of the region-of-interest image, and generating composite training data including at least a portion of the background image by modifying a first training image included in the first target training data based on the region-of-interest image.

## Description

### TECHNICAL FIELD

The present disclosure relates to a method and electronic device for generating training data for training of an artificial intelligence (Al) model. More specifically, the present disclosure relates to a method and electronic device for generating composite training data from existing original training data by using a background image.

### BACKGROUND ART

With the advancement of artificial intelligence (Al) technology, Al technologies are being used in various fields. An Al model needs to be trained with many training data items. However, it requires a great deal of time and cost to directly make the training data for the Al model. In order to reduce the cost and time, in many cases, the training is performed by using training data that is public on the Internet. The public training data on the Internet is a data set made for universal use, and may cause an error in a particular environment. Hence, there is a need for a method of generating training data that allows for a particular environment to train an Al model so that the Al model may operate more accurately in the environment where the Al model is used with existing training data.

### DISCLOSURE OF INVENTION

### SOLUTION TO PROBLEM

According to an aspect of the present disclosure, provided is a method of generating training data for training of an artificial intelligence (AI) model. The method of generating the training data may include obtaining a first image including an object corresponding to a subject of learning. The method of generating the training data may include obtaining a background image in which the object is not included based on a second image. captured at a same point of view as the first image. The method of generating the training data may include identifying a region of interest including the object in the first image. The method of generating the training data may include obtaining a region-of-interest image corresponding to the region of interest from a background image. The method of generating the training data may include determining first target training data corresponding to a context of the object from among existing original training data. determined based on a ratio between a width and a height of the region-of-interest image. The method of generating the training data may include generating composite training data including at least a portion of the background image by modifying a first training image included in the first target training data based on the region-of-interest image.

According to an aspect of the present disclosure, provided is a computer-readable computer medium storing a program for performing the aforementioned method.

According to an aspect of the present disclosure, provided is an electronic device (1400) for generating composite training data. The electronic device (1400) may include a memory (1410) and a processor (1420). The processor (1420) may be configured to execute one or more instructions stored in the memory (1410) to obtain a first image including an object corresponding to a subject of learning. The processor (1420) may be configured to execute one or more instructions stored in the memory (1410) to obtain a background image in which the object is not included based on a second image. captured at a same point of view as the first image. The processor (1420) may be configured to execute one or more instructions stored in the memory (1410) to identify a region of interest including the object in the first image. The processor (1420) may be configured to execute one or more instructions stored in the memory (1410) to obtain a region-of-interest image corresponding to the region of interest from the background image. The processor (1420) may be configured to execute one or more instructions stored in the memory (1410) to determine first target training data corresponding to a context of the object from among existing original training data.determined based on a ratio between a width and a height of the region-of-interest image. The processor (1420) may be configured to execute one or more instructions stored in the memory (1410) to generate composite training data including at least a portion of the background image by modifying a first training image included in the first target training data based on the region-of-interest image.

### BRIEF DESCRIPTION OF DRAWINGS

FIG. 1 is a diagram for describing a method of generating training data, according to an embodiment of the present disclosure.
FIG. 2A is a diagram for describing a method of generating a background image, according to an embodiment of the present disclosure.
FIG. 2B is a diagram for describing a method of generating a background image, according to an embodiment of the present disclosure.
FIG. 3 is a diagram for describing a method of identifying a region of interest, according to an embodiment of the present disclosure.
FIG. 4 is a diagram for describing a method of generating a region-of-interest image, according to an embodiment of the present disclosure.
FIG. 5A is a diagram for describing training data, according to an embodiment of the present disclosure.
FIG. 5B is a diagram for describing training data, according to an embodiment of the present disclosure.
FIG. 6 is a diagram for describing a method of training an artificial intelligence (AI) model, according to an embodiment of the present disclosure.
FIG. 7 is a diagram for describing a method of generating training data, according to an embodiment of the present disclosure.
FIG. 8 is a diagram for describing a method of determining whether to generate additional composite training data, according to an embodiment of the present disclosure.
FIG 9A is a flowchart for describing a method of determining whether to generate additional composite training data, according to an embodiment of the present disclosure.
FIG. 9B is a flowchart for describing a method of determining whether to generate additional composite training data, according to an embodiment of the present disclosure.
FIG. 10 is a diagram for describing a method of generating training data, according to an embodiment of the present disclosure.
FIG. 11 is a diagram for describing a method of generating training data by using a context, according to an embodiment of the present disclosure.
FIG. 12 is a diagram for describing a method of generating training data, according to an embodiment of the present disclosure.
FIG. 13 is a flowchart for describing a method of generating training data, according to an embodiment of the present disclosure.
FIG. 14 is a block diagram for describing a configuration of an electronic device, according to an embodiment of the present disclosure.
FIG. 15 is a flowchart for describing a method of generating training data, according to an embodiment of the present disclosure.
FIG. 16 is a diagram for describing a procedure for generating training data to use an Al model, according to an embodiment of the present disclosure.
FIG. 17 is a sequence diagram for describing a method of generating training data by using an electronic device and a server, according to an embodiment of the present disclosure.
FIG. 18 is a block diagram for describing a configuration of a server, according to an embodiment of the present disclosure.

### MODE FOR INVENTION

Throughout the present disclosure, the expression "at least one of a, b or c" indicates only a, only b, only c, both a and b, both a and c, both b and c, all of a, b, and c, or variations thereof.

The terms are selected as common terms widely used now, taking into account principles of the present disclosure, which may however depend on intentions of those of ordinary skill in the art, judicial precedents, emergence of new technologies, and the like. Some terms as herein used are selected at the applicant's discretion, in which case, the terms will be explained later in detail in connection with embodiments of the present disclosure. Therefore, the terms should be defined based on their meanings and descriptions throughout the present disclosure.

As used herein, the singular forms "a", "an" and "the" are intended to include the plural forms as well, unless the context clearly indicates otherwise. All terms including technical and scientific terms used herein have the same meaning as commonly understood by one of ordinary skill in the art to which this disclosure belongs. Terms including ordinal numbers like 'first', 'second', etc., may be used to indicate various components, but the components should not be restricted by the terms. These terms are used to distinguish one element from another.

The term "include (or including)" or "comprise (or comprising)" is inclusive or open-ended and does not exclude additional, unrecited elements or method steps. The terms "unit", "module", "block", etc., as used herein each represent a unit for handling at least one function or operation, and may be implemented in hardware, software, or a combination thereof.

Various modifications may be made to embodiments of the present disclosure, which will be described more fully hereinafter with reference to the accompanying drawings. The present disclosure should be understood as not limited to particular embodiments but including all the modifications, equivalents and replacements which belong to technical scope and ideas of the present disclosure.

Some related well-known technologies that possibly obscure the present disclosure will not be described. Numbers (e.g., first, second, etc.) as herein used are to distinguish components from one another.

When the term "connected" or "coupled" is used, a component may be directly connected or coupled to another component. However, unless otherwise defined, it is also understood that the component may be indirectly connected or coupled to the other component via another new component.

Throughout the specification, a component expressed with "~ unit", "~module", or the like may be a combination of two or more components or may be divided by function into two or more. Each of the components may perform its major function and further perform part or all of a function served by another component. In this way, part of a major function served by each component may be dedicated and performed by another component.

Functions related to Al according to embodiments of the present disclosure are operated through a processor a memory. There may be one or more processors. The one or more processors may include a universal processor such as a central processing unit (CPU), an application processor (AP), a digital signal processor (DSP), etc., a graphic processing unit (GPU), a vision processing unit (VPU), etc., or a dedicated artificial intelligence (AI) processor such as a neural processing unit (NPU). The one or more processors may control processing of input data according to a predefined operation rule or an Al model stored in the memory. When the one or more processors are the dedicated Al processors, they may be designed in a hardware structure that is specific to dealing with a particular Al model.

The predefined operation rule or the Al model may be made by learning. Specifically, the Al model being made by learning refers to the predefined operation rule or the Al model established to perform a desired feature (or an object) being made when a basic Al model is trained by a learning algorithm with a lot of training data. Such learning may be performed by a device itself in which Al is performed according to the present disclosure, or by a separate server and/or system. Examples of the learning algorithm may include supervised learning, unsupervised learning, semi-supervised learning, or reinforcement learning, without being limited thereto.

The Al model may include a plurality of neural network layers. Each of the plurality of neural network layers may have a plurality of weight values, and perform neural network operation through operation between an operation result of the previous layer and the plurality of weight values. The plurality of weight values owned by the plurality of neural network layers may be optimized by learning results of the Al model. For example, the plurality of weight values may be updated to reduce or minimize a loss value or a cost value obtained by the Al model during a training procedure. An artificial neural network may include, for example, a convolutional neural network (CNN), a deep neural network (DNN), a recurrent neural network (RNN), a restricted Boltzmann machine (RBM), a deep belief network (DBN), a bidirectional recurrent deep neural network (BRDNN), or a deep Q-network, without being limited thereto.,,,,,,,,,,,

Throughout the specification, the term "background" may refer to an area or scene except for an object corresponding to a subject of learning. For example, when an image includes a human being corresponding to the subject of learning, the background may refer to a remaining area excluding the human being. Furthermore, for example, when an image does not include any person corresponding to the subject of learning at all, the background may refer to the whole area of the image. For the same image, a different background may be determined depending on the subject of learning.

In an embodiment of the present disclosure, the background may include an object that does not correspond to the subject of learning. For example, when an object corresponding to the subject of learning is a human being, the background may include an object (e.g., a dog) that does not correspond to the subject of learning. Furthermore, for example, when the subject of learning is a certain person (e.g., mother of a family), the background may include a person (e.g., father of the family) who does not correspond to the subject of learning. Moreover, for example, when the subject of learning is an object that corresponds to a certain condition (e.g., gender, age, skin color, etc.), the background may include an object that does not correspond with the certain condition.

In an embodiment of the present disclosure, the background may include a stationary object that does not correspond to the subject of learning excluding a moving object that corresponds to the subject of learning. For example, the background may not include a moving object such as a person or dog moving over time but include a stationary object such as furniture or a wall that does not move over time.

In the specification, the term "background image" may refer to an image including the background. In an embodiment of the present disclosure, the background image may be obtained using one or more images captured at the same point of view. For example, the background image may be obtained by averaging a plurality of images captured by using a camera having a fixed viewing angle. In an embodiment of the present disclosure, the background image may be determined as an image that does not include an object corresponding to the subject of learning. For example, the background image may be determined to be an image among one or more captured images, which does not include an object corresponding to the subject of learning. In an embodiment of the present disclosure, the background image may be generated from an image including the object by removing the object. For example, the background image may remove an object area from an image including the object, and may be generated in a way of compensating the object area based on the remaining area. In an embodiment of the present disclosure, the background image may refer to an image including an object that is commonly included in the plurality of images,. For example, the background image may refer to an image including stationary objects fixed in their places in the plurality of images excluding moving objects in the plurality of images.

Throughout the specification, the term "region of interest" may refer to an area including an object corresponding to the subject of learning in an image. For example, when the subject of learning is a human being, the region of interest may be an area including the human being in the image. In an embodiment of the present disclosure, the region of interest may refer to a rectangular area of a minimum size including an object corresponding to the subject of learning. For example, when the subject of learning is a human being, the region of interest may be a minimum-sized rectangular area including the human being.

In the specification, the term "region-of-interest image" may refer to an image corresponding to a region of interest in the background image. In an embodiment of the present disclosure, the region-of-interest image may be obtained using the background image. In an embodiment of the present disclosure, an electronic device may use the background image to generate training data including at least a portion of the background. The electronic device may train an Al model with training data that includes at least a portion of the background.

Throughout the specification, the term "training data" may refer to data for training the Al model. In an embodiment of the present disclosure, the training data may include an image including an object and labeling information for the object. For example, when an Al model is one for performing pose estimation, the training data may include an image including the object and information about a pose of the object. For example, when an Al model is one for performing object detection, the training data may include an image including the object, location information of the object and class information regarding the type of the object.

Throughout the specification, the term "original training data" may refer to training data for training the Al model, where the background is not considered. For example, the original training data may be training data that is public for training the Al model. The background of the original training data is not a background captured by a camera of the electronic device that uses the Al model but an arbitrary background. The original training data may include training data for an object that is a subject of learning.

In the specification, the term "target training data" may refer to training data determined from the original training data to generate composite training data by being combined with the background image. In an embodiment of the present disclosure, the target training data may be determined from the original training data based on a width and a height of the region-of-interest image. For example, the target training data may be training data having the same or similar ratio between a width and a height ,,to a ratio between a width and a height of the region of interest among the original training data.

Throughout the specification, the term "composite training data" may refer to training data generated by combining the target training data and the region-of-interest image. In an embodiment of the present disclosure, the composite training data may be generated by combining an object that is the subject of learning for the Al model and the region-of-interest image from the target training data.

Embodiments of the present disclosure will now be described in detail with reference to accompanying drawings to be readily practiced by those of ordinary skill in the art. However, the embodiments of the present disclosure may be implemented in many different forms, and not limited thereto as will be discussed herein. In the drawings, parts unrelated to the description are omitted for clarity, and like numerals refer to like elements throughout the specification.

The present disclosure will now be described with reference to accompanying drawings.

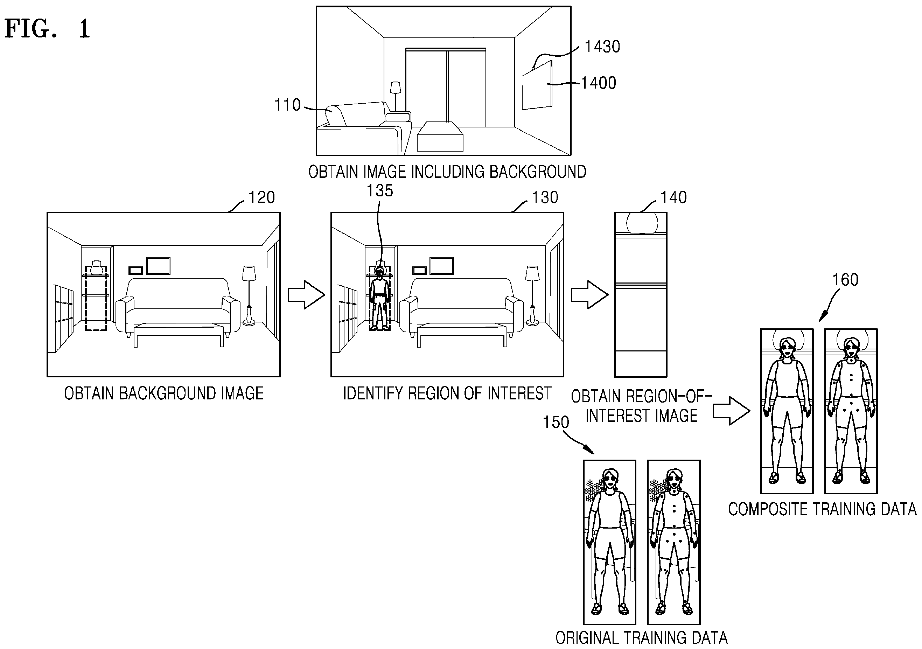

FIG. 1 is a diagram for describing a method of generating training data, according to an embodiment of the present disclosure.

Referring to FIG. 1, an electronic device 1400 may obtain an image including a background 110. In an embodiment of the present disclosure, the electronic device 1400 may use a camera 1430 to obtain an image including the background 110. For example, when the electronic device 1400 is a television (TV), the TV may use the camera 1430 to obtain an image including a background of indoor space. The background 110 may be an area included in a viewing angle of the camera 1430.

In an embodiment of the present disclosure, the electronic device 1400 may obtain a background image 120 based on an image including the background 110. In an embodiment of the present disclosure, the electronic device 1400 may obtain the background image 120 by using one or more images captured at the same point of view. For example, the electronic device 1400 may obtain the background image by averaging a plurality of images captured by using the camera 1430 having the fixed viewing angle. In an embodiment of the present disclosure, the electronic device 1400 may determine an image that does not include an object corresponding to a subject of learning as the background image 120. For example, the electronic device 1400 may determine an image that does not include the object corresponding to the subject of learning among the one or more captured images as the background image 120. In an embodiment of the present disclosure, the electronic device 1400 may generate a background image by removing the object from an image including the object. For example, the electronic device 1400 may remove an object area from the image including the object, and generate the background image 120 in a way of compensating the object area based on the remaining area. In an embodiment of the present disclosure, the electronic device 1400 may determine an image that includes an object shared by the plurality of images as the background image 120. For example, the electronic device 1400 may determine the background image to be an image including stationary objects having fixed positions in the plurality of images excluding moving objects having positions moving in the plurality of images.

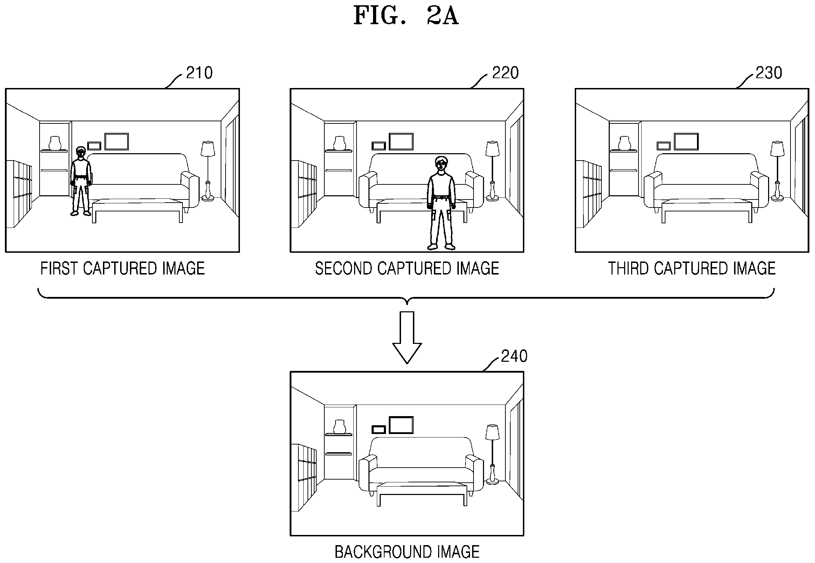

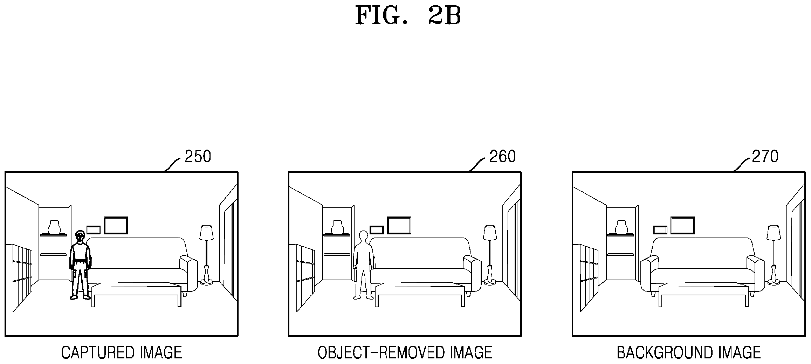

In an embodiment of the present disclosure, the electronic device 1400 may obtain the background image 120 each time it captures or obtains an image. For example, the electronic device 1400 may obtain the background image 120 each time it identifies a region of interest 135. In an embodiment of the present disclosure, the electronic device 1400 may obtain the background image 120 when a certain condition is satisfied. For example, the electronic device 1400 may obtain the background image 120 at certain intervals, and use the background image 120 to identify the region of interest before obtaining a new background image. Alternatively, for example, the electronic device 1400 may generate the background image 120 in a case of performing a certain task. For example, the electronic device 1400 may generate the background image 120 when running a workout application. A method of obtaining the background image according to various embodiments of the present disclosure will be described in more detail with reference to FIGS. 2A and 2B.

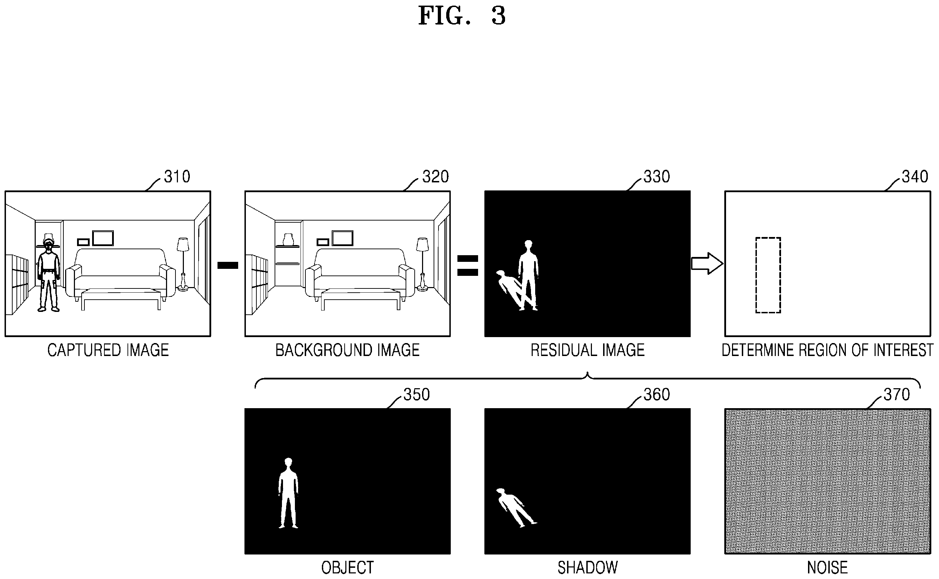

In an embodiment of the present disclosure, the electronic device 1400 may identify the region of interest 135 of an image 130 including an object. The region of interest 135 may refer to an area including an object that corresponds to a subject of learning in the image 130 including the object. For example, when an Al model is a pose estimation model that recognizes a pose of a human being, the region of interest 135 may refer to an area that includes the human being. In an embodiment of the present disclosure, the region of interest 135 may be determined to be a rectangle of a minimum size that includes the object, but is not limited thereto and may have various forms. A method of identifying the region of interest according to an embodiment of the present disclosure will be described in more detail with reference to FIG. 3.

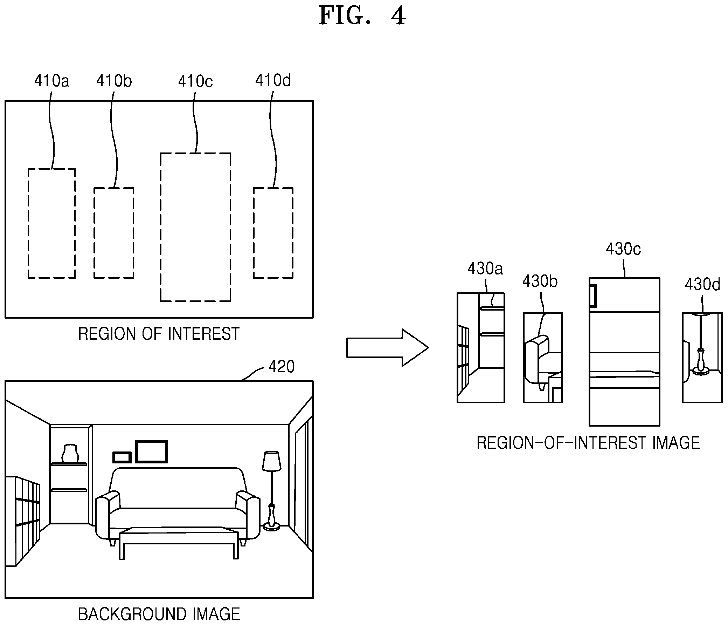

In an embodiment of the present disclosure, the electronic device 1400 may obtain a region-of-interest image 140. For example, the region-of-interest image 140 may be determined to be an image corresponding to the region of interest 135 of the background image 120. Alternatively, the region-of-interest image 140 may be obtained based on other captured images than the captured image 130 that becomes a basis of the region of interest 135. The region-of-interest image 140 may also include an area that is hidden by the object and is not captured in the image 130 including the object. A method of obtaining the region-of-interest image according to an embodiment of the present disclosure will be described in more detail with reference to FIG. 4.

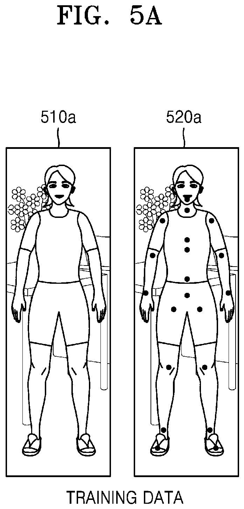

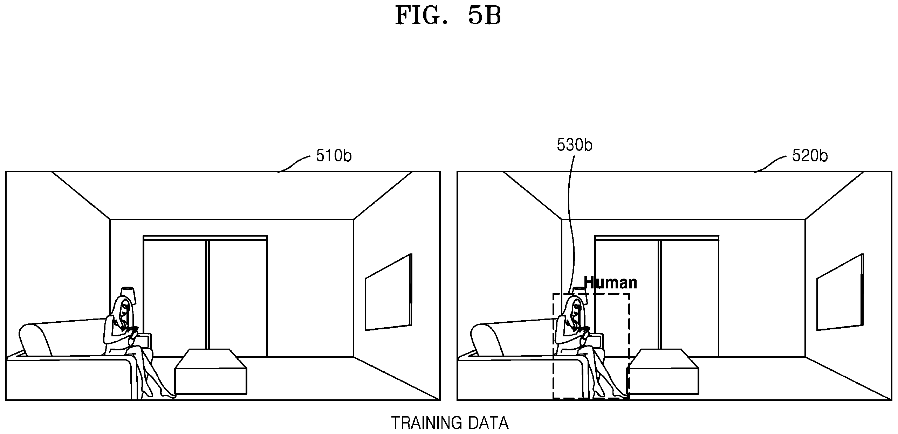

In an embodiment of the present disclosure, the electronic device 1400 may obtain original training data 150. The original training data 150 may be an existing training data set. The original training data may be training data including an arbitrary background unrelated with an area to be image-captured by the camera of the electronic device. For example, the original training data may be training data captured against various backgrounds. When the electronic device 1400 uses an Al model trained with the original training data, it may happen to have a low accuracy for a certain background. For example, the Al model for estimating a pose of a person may determine a window frame included in the image as an arm of the person. The original training data according to an embodiment of the present disclosure will be described in more detail with reference to FIGS. 5A and 5B.

In an embodiment of the present disclosure, the electronic device 1400 may generate composite training data 160. The electronic device 1400 may generate the composite training data 160 based on the original training data 150 and the region-of-interest image 140. The composite training data 160 may be generated by combining data about an object that is the subject of learning of the Al model from the original training data 150 and the region-of-interest image 140. For example, the electronic device 1400 may generate the composite training data 160 that includes the background 110 and the object that is the subject of learning by combining the person included in the original training data 150 and the region-of-interest image 140 that is at least a portion of the background 110.

In an embodiment of the present disclosure, the electronic device 1400 may determine target training data based on the original training data 150 and the region-of-interest image 140. In an embodiment of the present disclosure, the target training data may be determined from the original training data 150 based on the size of the region-of-interest image 140. The target training data may be determined to be one corresponding to the ratio between the width and the height of the region-of-interest image 140 among the original training data 150. For example, when the ratio between the width and the height of the region-of-interest image 140 is 1:2 (e.g., one to two), the target training data may be determined to be one among the original training data, which has a ratio between width and height that is same as or similar to 1:2. The electronic device 1400 may generate the composite training data 160 based on the target training data and the region-of-interest image 140.

The electronic device 1400 may train the Al model with the composite training data 160 generated based on the background 110. The Al model trained using the composite training data 160 may serve the purpose of the Al model with higher accuracy for an input image captured against the background 110.

For convenience of explanation, it will now be assumed, unless otherwise stated, that the Al model is a pose estimation model and the subject of learning is a person, but the present disclosure is not limited thereto, and the subject of learning may vary depending on the type of the Al model.

FIG. 2A is a diagram for describing a method of generating a background image, according to an embodiment of the present disclosure.

Referring to FIG. 2A, the electronic device 1400 may obtain a background image 240 based on a plurality of captured images, 210, 220 and 230. For example, the first captured image 210 and the second captured image 220 include an object at different locations, and the third captured image 230 may not include the object. For convenience of explanation, it will be described as an example that the subject of learning is one moving object (e.g., a person) and the captured image includes one moving object, but the present disclosure is not limited thereto, and the subject of learning may be determined depending on the training data and the case is the same for a captured image including a plurality of objects.

In an embodiment of the present disclosure, the electronic device 1400 may generate the background image to include stationary objects having fixed positions in the plurality of images, excluding the moving object having positions moving in the plurality of images 210, 220 and 230. The electronic device 1400 may distinguish the moving object and stationary objects in the plurality of images 210, 220 and 230. The electronic device 1400 may obtain the background image 240 based on an image corresponding to the stationary object. For example, the electronic device 1400 may identify the object included in the first captured image 210 and the second captured image 220 as the moving object and the others as the stationary object. The electronic device 1400 may identify objects included in the third captured image 230 as the stationary objects. The electronic device 1400 may generate the background image 240 based on an image corresponding to the stationary object of the first captured image 210, an image corresponding to the stationary object of the second captured image 220 and an image corresponding to the stationary object of the third captured image 230.

In an embodiment of the present disclosure, the electronic device 1400 may obtain the background image 120 by averaging the plurality of captured images 210, 220 and 230. The plurality of captured images may include images including the object such as the first captured image 210 or the second captured image 220. On the other hand, the electronic device 1400 may generate the background image 240 that does not include the object by averaging the multiple images.

In an embodiment of the present disclosure, the electronic device 1400 may determine an image that does not include an object corresponding to a subject of learning as the background image 240. For example, the electronic device 1400 may determine the third captured image 230 that does not include any object corresponding to the subject of learning among the plurality of captured images 210, 220 and 230 as the background image 240.

In an embodiment of the present disclosure, a procedure in which the electronic device 1400 generates a background image based on a captured image including an object will be described with reference to FIG. 2B.

FIG. 2B is a diagram for describing a method of generating a background image, according to an embodiment of the present disclosure.

Referring to FIG. 2B, the electronic device 1400 may obtain a background image 270 by removing an object included in a captured image 250. In an embodiment of the present disclosure, the electronic device 1400 may obtain an object-removed image 260 by removing an object area of the captured image 250 including the object corresponding to a subject of learning. The electronic device 1400 may obtain the object-removed image 260 including an object that does not correspond to the subject of learning included in the captured image 250. For example, when the captured image 250 includes a person that is the subject of learning and a dog that is not the subject of learning, the electronic device 1400 may obtain the object-removed image 260 by removing the person ,but not removing the dog from the captured image 250.

In an embodiment of the present disclosure, the electronic device 1400 may generate the background image 270 in a method of compensating an area of the object of the object-removed image 260 based on other area than the object area. For example, the electronic device 1400 may restore pixel values of the removed area based on pixel values of the non-removed area of the object-removed image 260. The electronic device 1400 may use various Inpainting schemes to obtain the background image from the image including the object.

FIG. 3 is a diagram for describing a method of identifying a region of interest, according to an embodiment of the present disclosure.

Referring to FIG. 3, a background image 320 may correspond to the background image 120 of FIG. 1, the image 240 of FIG. 2A or the background image 270 of FIG. 2B, but is not limited thereto. A captured image 310 may correspond to the plurality of captured images 210, 220 and 230 of FIG. 2A or the captured image 250 of FIG. 2B, but is not limited thereto and may be an image captured separately.

In an embodiment of the present disclosure, the electronic device 1400 may generate a residual image 330 based on the captured image 310 and the background image 320. For example, the residual image 330 may include an object of a subject of learning. In an embodiment of the present disclosure, the electronic device 1400 may determine a region of interest 340 based on the residual image 330. In an embodiment of the present disclosure, the region of interest 340 may be a minimum rectangle including the object in the residual image 330.

In an embodiment of the present disclosure, the residual image 330 may include at least part of a residual image 350 regarding the object, a residual image 360 regarding the shadow and a residual image 370 regarding noise. In an embodiment of the present disclosure, the region of interest 340 may be a minimum rectangle including the residual image 350 regarding the object.

In an embodiment of the present disclosure, when the electronic device 1400 successively captures images, the electronic device 1400 may determine the region of interest 340 based on the plurality of captured images 310. For example, the electronic device 1400 may determine a region of interest based on the residual image between the plurality of images 310.

In an embodiment of the present disclosure, the electronic device 1400 may identify a region of interest at certain time intervals. For example, the electronic device 1400 may identify a region of interest every second, and generate composite training data when there is the region of interest.

In an embodiment of the present disclosure, the electronic device 1400 may identify a region of interest based on a certain condition being satisfied. For example, the electronic device 1400 may identify a region of interest when a certain application (e.g., a workout application) runs.

In an embodiment of the present disclosure, the electronic device 1400 may identify a region of interest when a motion is detected by a sensor. For example, the electronic device 1400 may perform an operation of identifying a region of interest when recognizing a motion of an object through an infrared sensor.

FIG. 4 is a diagram for describing a method of generating a region-of-interest image, according to an embodiment of the present disclosure.

Referring to FIG. 4, regions of interest, 410a, 410b, 410c and 41d and a background image 420 may correspond to the region of interest 135 and the background image 120 of FIG. 1, but are not limited thereto.

In an embodiment of the present disclosure, the electronic device 1400 may obtain information regarding the plurality of regions of interest 410a, 410b, 410c and 410d and the background image 420. In an embodiment of the present disclosure, the electronic device 1400 may obtain regions of interest, 430a, 430b, 430c and 430d corresponding to the regions of interest 410a, 410b, 410c and 410d from the background image 420. That is, the electronic device 1400 may obtain the regions of interest 430a, 430b, 430c and 430d which are backgrounds of areas where objects are identified from the background image 420.

In an embodiment of the present disclosure, the background image 420 may be generated each time the regions of interest 430a, 430b, 430c and 430d are obtained. In an embodiment of the present disclosure, the background image 420 may be one generated at a certain point ofview.

FIG. 5A is a diagram for describing training data, according to an embodiment of the present disclosure.

Referring to FIG. 5A, training data may include a training image 510a and training data 520a. In an embodiment of the present disclosure, the training data may be for training an Al model for pose estimation for an object.

The training image 510a may be one including the object for which a pose is to be estimated. Furthermore, the training image 510a may include an arbitrary background. The background of the training image 510a may be different from an actual environment in which the Al model is performed.

The training data 520a may include information for identifying a pose. For example, the training data 520a may include information about joints of the human being and information about connection relationships between the joints. Although, for convenience of explanation, the training data 520a is shown as an image with the information about joints of the human being and the information about connection relationships between the joints added to the training image 510a, embodiments are not limited thereto and the training data 520a may have the form in which training data is represented in various ways.

The Al model for pose estimation may be trained using the training image 510a and the training data 520a including information about a pose. For example, the Al model may be trained to output result data in a way that reduces errors between the output data obtained by inputting the training image 510a to the Al model and the training data 520a.

FIG. 5B is a diagram for describing training data, according to an embodiment of the present disclosure.

Referring to FIG. 5A, training data may include a training image 510b and training data 520b. In an embodiment of the present disclosure, the training data may be for training an Al model for object detection.

The training image 510b may be one including an object for which a pose is to be estimated. Furthermore, the training image 510b may include an arbitrary background. The background of the training image 510b may be different from an actual environment in which the Al model is performed.

The training data 520b may include information about an object to be detected. For example, the training data 520b may include information about an area where the object is present (e.g., a bounding box) 530b and a type of the object (e.g., a person). Although, for convenience of explanation, the training data 520b is shown as an image with the information about the area where the object is present 530b and the type of the object added to the training image 510b, embodiments are not limited thereto and the training data 520b may be represented in various ways. For example, the training data 520b may be stored in the form of text. For example, the training data 520b may represent information about coordinates of the area where the object is present 530b (e.g., coordinate values of the top left coordinates and bottom right coordinates of the bounding box) and the type of the object in the form of text.

The Al model for object detection may be trained using the training image 510b and the training data 520b including the information about the area where the object is present and the type of the object For example, the Al model may be trained to output data in a way that reduces errors between the output data obtained by inputting the training image 510b to the Al model and the training data 520b.

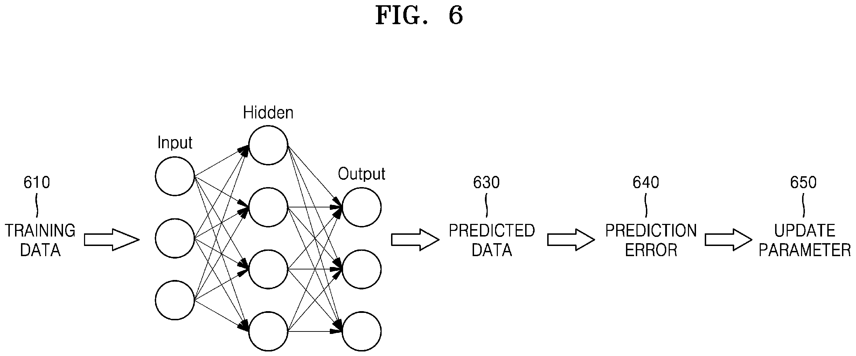

FIG. 6 is a diagram for describing a method of training an Al model, according to an embodiment of the present disclosure.

Referring to FIG. 6, shown is a method of training an Al model 620 with training data 610. Although the training data 610 may be the training data of FIGS. 5A and 5B, embodiments are not limited thereto and may correspond with the type of the Al model. In an embodiment of the present disclosure, a procedure in which the electronic device 1400 trains an Al model, but it is not limited thereto and the Al model may be trained using a server.

The training data 610 may include a training image and training information to be input to the Al model 620. The electronic device 1400 may output predicted data 630 by inputting the training data 610 to the Al model 620. The electronic device 1400 may measure a predicted error 640 based on the training information of the training data 610 and the predicted data 630.

The electronic device 1400 may update parameters 650 of the Al model 620 based on the predicted error 640.

In an embodiment of the present disclosure, the electronic device 1400 trains the Al model 620 to be suited for the training data 610. When the electronic device trains the Al model with training data that includes at least a portion of the background image, the Al model may have higher prediction accuracy than an Al model trained using training data against an arbitrary background.

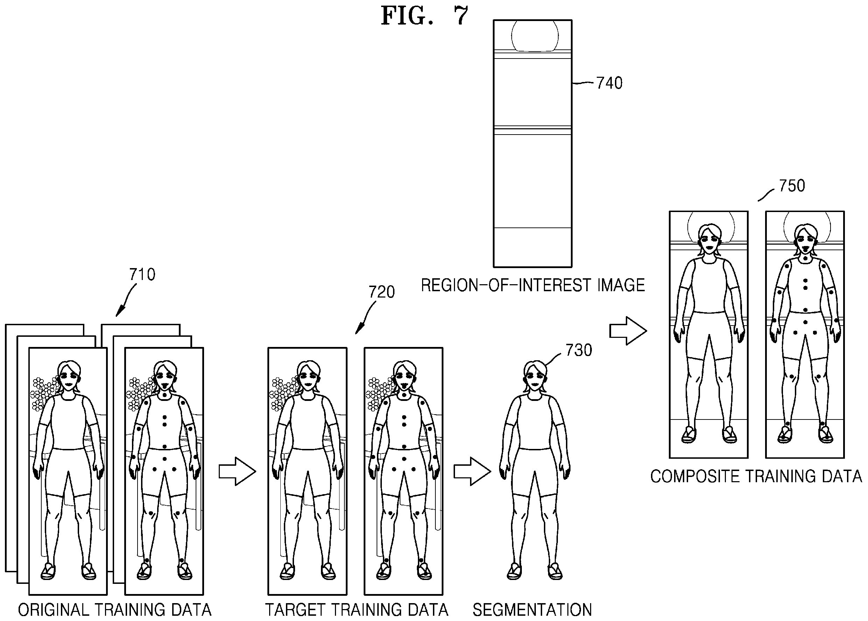

FIG. 7 is a diagram for describing a method of generating training data, according to an embodiment of the present disclosure.

Referring to FIG. 7, composite training data 750 may be generated based on original training data 710 and a region-of-interest image 740. In an embodiment of the present disclosure, the original training data 710 may correspond to the original training data 150, the region-of-interest image 740 may correspond to the region-of-interest image 140, and the composite training data 750 may correspond to the composite training data 160. For convenience of explanation, what are described in FIG. 1 will not be repeated in describing the original training data 710, the region-of-interest image 740 and the composite training data 750.

In an embodiment of the present disclosure, the electronic device may determine target training data 720 based on the original training data 710. The electronic device may determine the target training data 720 based on a ratio between a width and a height of the region-of-interest image 740. Alternatively, the electronic device may determine the target training data 720 based on a ratio between a width and a height of the region of interest as described in FIG. 1. The target training data 720 may be selected from among the original training data 710.

The electronic device may obtain data about an object 730 corresponding to the subject of learning from the target training data 720. The electronic device may separate an object image included in the target training data 720. For example, the electronic device may perform image segmentation for the object 730 included in the target training data 720. The object 730 may refer to a target to be recognized by the Al model. For example, when the Al model is for recognizing a human being, things such as furniture other than the human being may not be separated, but the present disclosure is not limited thereto and various types of objects 730 may be determined depending on the type of the Al model.

The electronic device may use an Al model trained to divide the subject of learning from the target training data 720 to separate the object 730 from the target training data 720. The electronic device may use a color difference between the object 730 of the target training data 720 and the background to separate the object 730 from the target training data 720. Without being limited to the aforementioned method, the electronic device may divide the object 730 from the target training data 720 in many different methods.

The electronic device may generate the composite training data 750 by combining the object 730 with the region-of-interest image 740.

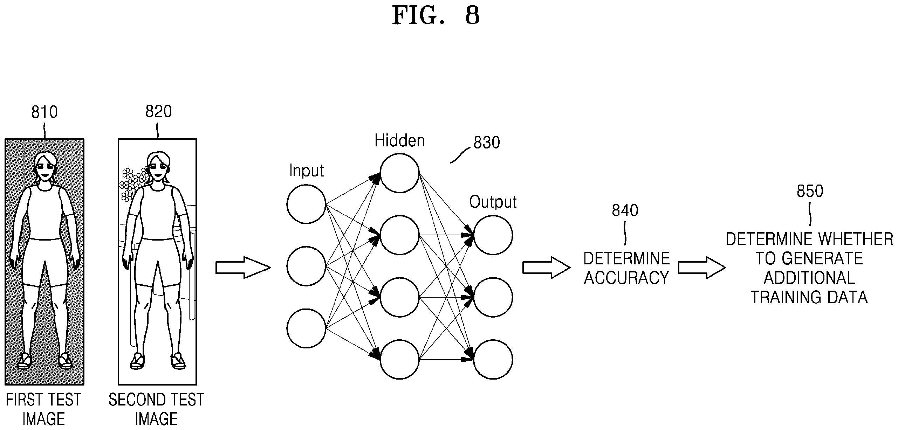

FIG. 8 is a diagram for describing a method of determining whether to generate additional composite training data, according to an embodiment of the present disclosure.

Referring to FIG. 8, the electronic device may use a plurality of test images, 810 and 820, to determine accuracy of an Al model 830 in 840.

In an embodiment of the present disclosure, the first test image 810 may be generated based on a certain background and target training data. For example, the first test image 810 may be generated by combining an object corresponding to the subject of learning of the target training data with the certain background. The certain background may be a background that has no influence on training data. For example, the certain background may be solid gray.

In an embodiment of the present disclosure, the second test image 820 may be generated based on a background image and target training data. For example, the second test image 820 may be generated by combining an object corresponding to the subject of learning of the target training data with at least a portion of the background image. For example, the second test image 820 may be composite training data.

In an embodiment of the present disclosure, the electronic device may input the respective first test image 810 and second test image 820 to the Al model 830 to determine the accuracy. For example, the electronic device may determine the accuracy in 840 by comparing data output based on the first test image 810 and the second test image 820 being input to the Al model 830 with correct answer data.

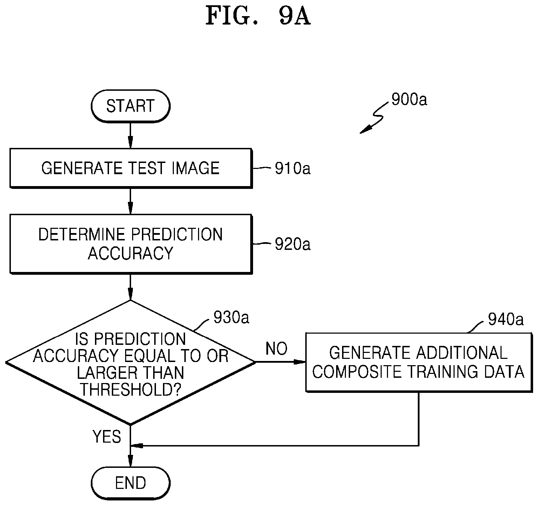

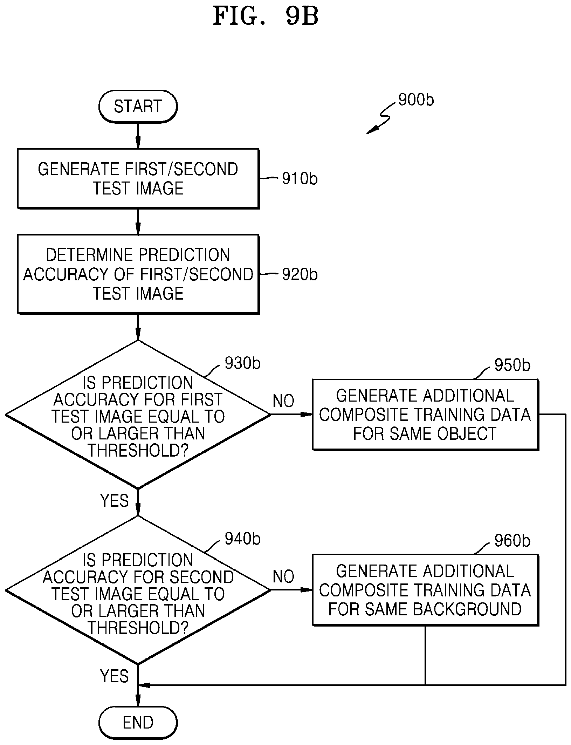

The electronic device may determine whether to generate additional composite training data in 850 based on the accuracy for the first test image 810 and the accuracy for the second test image 820. In an embodiment of the present disclosure, how to determine whether to generate additional composite training data in 850 based on the accuracy for the first test image 810 and the accuracy for the second test image 820 will be described in detail with reference to FIGS. 9A and 9B.

FIG 9A is a flowchart for describing a method of determining whether to generate additional composite training data, according to an embodiment of the present disclosure.

Referring to FIG. 9A, a method 900a of determining whether to generate additional composite training data according to an embodiment of the present disclosure begins with operation 910a. The electronic device 1400 may use an Al model trained with training data including at least a portion of the background image to determine whether to generate additional composite training data.

At operation 910a, the electronic device 1400 may generate a test image. In an embodiment of the present disclosure, the electronic device 1400 may use a training image included in the composite training data as the test image. For example, the electronic device 1400 may use the second test image 820 of FIG. 8 as the test image. In an embodiment of the present disclosure, the electronic device 1400 may use an image obtained by combining the training image included in the composite training data with a certain background as the test image. For example, the electronic device 1400 may use the first test image 810 of FIG. 8 as the test image.

At operation 920a, the electronic device 1400 may determine prediction accuracy based on an output result obtained by inputting the test image to the Al model.

At operation 930a, the electronic device 1400 may identify whether the prediction accuracy for the test image is equal to or larger than a threshold. When the prediction accuracy is equal to or larger than the threshold, the operation is terminated, and when the prediction accuracy is smaller than the threshold, operation 940a is performed.

At operation 940a, the electronic device 1400 may generate additional composite training data. In an embodiment of the present disclosure, the electronic device 1400 may generate the additional composite training data by changing the background for the same object with the composite training data. In an embodiment of the present disclosure, the electronic device 1400 may generate additional composite training data by changing the object for the same background with the composite training data.

FIG. 9B is a flowchart for describing a method of determining whether to generate additional composite training data, according to an embodiment of the present disclosure.

Referring to FIG. 9B, a method 900b of determining whether to generate additional composite training data according to an embodiment of the present disclosure begins with operation 910b. The electronic device 1400 may use an Al model trained with training data including at least a portion of the background image to determine whether to generate additional composite training data.

At operation 910b, the electronic device 1400 may generate a first test image and a second test image. In an embodiment of the present disclosure, the first test image and the second test image may correspond to the first test image 810 and the second test image 820 of FIG. 8.

At operation 920b, the electronic device 1400 may determine each prediction accuracy based on an output result obtained by inputting each of the first and second test images to the Al model.,,

At operation 930b, the electronic device 1400 may identify whether the prediction accuracy for the first test image is equal to or larger than a threshold. When the prediction accuracy is equal to or larger than the threshold, operation 940b is performed, and when the prediction accuracy is smaller than the threshold, operation 950b is performed.

At operation 940b, the electronic device 1400 may identify whether the prediction accuracy for the second test image is equal to or larger than the threshold. When the prediction accuracy is equal to or larger than the threshold, the operation is terminated, and when the prediction accuracy is smaller than the threshold, operation 960b is performed. In an embodiment of the present disclosure, the threshold At operation 940 and the threshold At operation 930 may be set differently,,.

At operation 950b, the electronic device 1400 may generate additional composite training data. In an embodiment of the present disclosure, the electronic device 1400 may generate the additional composite training data by changing the background for the same object with the composite training data. Low prediction accuracy for the first test image may be understood that the prediction for data including the object is inaccurate. By generating additional composite training data for the same object, prediction accuracy of the Al model for the object may increase.

At operation 960b, the electronic device 1400 may generate additional composite training data. In an embodiment of the present disclosure, the electronic device 1400 may generate additional composite training data by changing the object for the same background with the composite training data. Low prediction accuracy for the second test image may be understood that the prediction for data including the background is inaccurate. By generating additional composite training data for the same background, prediction accuracy of the Al model for the background may increase.

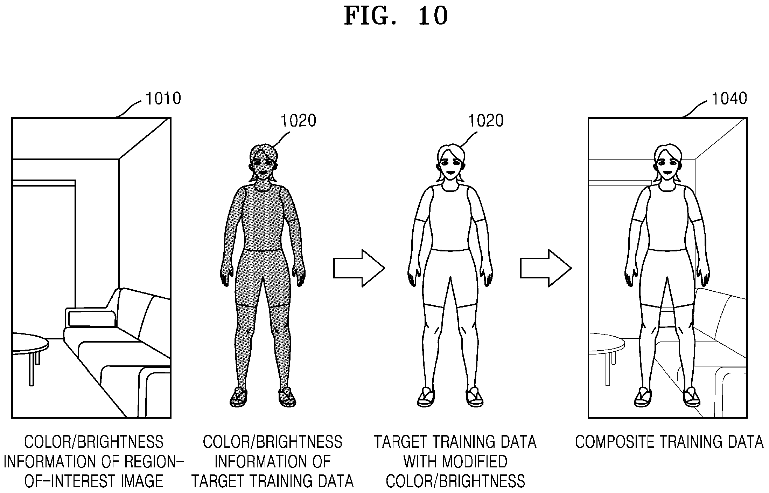

FIG. 10 is a diagram for describing a method of generating training data, according to an embodiment of the present disclosure.

Referring to FIG. 10, the electronic device may generate composite training data 1040 based on color information and brightness information of a region-of-interest image 1010. In an embodiment of the present disclosure, target training data 1020 may be an object corresponding to the subject of learning from the target training data as in 730 of FIG. 7.

In an embodiment of the present disclosure, the electronic device may obtain at least one of the color information or the brightness information of the region-of-interest image 1010. The electronic device may calculate at least one of the color information or the brightness information based on each pixel value of the region-of-interest image 1010. For example, based on color information (e.g., red-green-blue (RGB)) of the pixel of the region-of-interest image 1010, the electronic device may calculate hue, saturation and luminance (HSL) values of the pixel. The color of the region-of-interest image 1010 may be determined to be an average of hue (H) values of the pixels. The brightness of the region-of-interest image 1010 may be determined to be an average of luminance (L) values of the pixels.

In an embodiment of the present disclosure, the electronic device may modify at least one of a color or a brightness of the target training data 1020 based on at least one of the color information or the brightness information of the region-of-interest image 1010.

The electronic device may correct an H value of the training data 1020 based on the average of H values of the region-of-interest image 1010 (hereinafter, H_1010) and the average of H values of the training data 1020 (hereinafter, H_1020). For example, the H value of the training data 1020 may be corrected as follows:
H_1020(x, y) = H_1020(x, y) + a(H_1010 - H_1020)(where, a is a value of a correction level)

The electronic device may correct an L value of the training data 1020 based on the average of L values of the region-of-interest image 1010 (hereinafter, L_1010) and the average of L values of the training data 1020 (hereinafter, L_1020). For example, the L value of the training data 1020 may be corrected as follows:
L_1020(x, y) = L_1020(x, y) + b(L_1010 - L_1020) (where, b is a value of a correction level)

The electronic device may generate composite training data 1040 by combining the target training data 1020 for which at least one of the color or the brightness is modified with the region-of-interest image 1010.

The electronic device may make composite training data similar to an actually captured image by changing the color and/or the brightness of the region-of-interest image 1010 and target training data 1020 to be similar. In other words, the electronic device may obtain training data in which the background and the object are both bright or both dark, as if both the background and the object are image-captured under the same lighting condition as the actually captured image.

In an embodiment of the present disclosure, although a procedure in which the electronic device changes the brightness of the target training data 1020 based on brightness information of the region-of-interest image 1010 is described, embodiments are not limited thereto and the brightness of the target training data 1020 may be changed based on brightness information of the background image. For example, the electronic device may obtain brightness information of the background image, and change the brightness of the target training data 1020 based on the brightness information of the background image regardless of the region of interest for the target training data 1020.

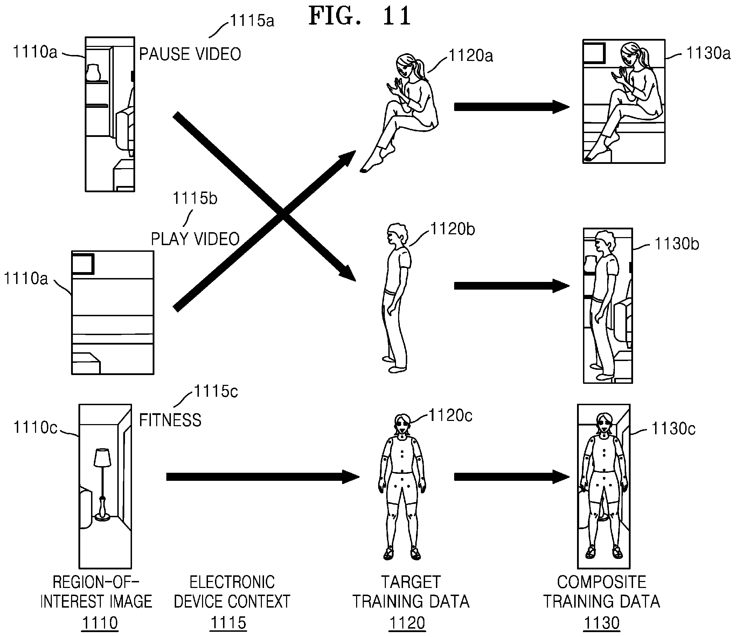

FIG. 11 is a diagram for describing a method of generating training data by using a context, according to an embodiment of the present disclosure.

Referring to FIG. 11, a region-of-interest image 1110 may correspond to the region-of-interest image 140 and a composite training data 1130 may correspond to the composite training data 160 of FIG. 1, but embodiments are not limited thereto. Target training data 1120 may correspond to the target training data 720 of FIG. 7, but embodiments are not limited thereto.

For convenience of explanation, a method of generating composite training data for the Al model for human being's pose estimation is taken as an example and the subject of learning is assumed to be the user, but embodiments are not limited thereto and the method may also be applied to other Al models.

The electronic device 1400 may determine the target training data 1120 based on the region-of-interest image 1110. In an embodiment of the present disclosure, the electronic device 1400 may determine the target training data 1120 based on a ratio between a width and a height of the region-of-interest image 1110. In an embodiment of the present disclosure, the electronic device 1400 may choose the target training data 1120 including a training image having ratio between width and height that is the same as or similar to a ratio between a width and a height of the region-of-interest image 1110 from among original training data.

In an embodiment of the present disclosure, the electronic device 1400 may determine an object context included in the region-of-interest image 1110 based on the ratio between the width and the height of the region-of-interest image 1110. For example, the object context may include information about whether the user is seated, standing or working out.

In an embodiment of the present disclosure, the electronic device 1400 may determine the object context by identifying a first context for the region of interest based on the region-of-interest image 1110. For example, the electronic device 1400 may identify the first context in which the region-of-interest image 1110 includes a sofa. Based on the first context that includes the sofa, the electronic device 1400 may determine the object context as a state in which the user is seated or lying. For example, the electronic device 1400 may determine the object context as a state in which the user stands, based on the region-of-interest image 1110a identified as not including furniture (e.g., a chair) which allows the user to be seated thereon.

In an embodiment of the present disclosure, the electronic device 1400 may determine the object context based on second context information 1115 with respect to the electronic device 1400. In the present disclosure, the second context information 1115 may refer to context information about an operation of the electronic device or an external electronic device that generates training data. For example, the second context information 1115 may include information 1115a indicating that a video of the electronic device 1400 is in a paused state, information 1115b indicating that the video of the electronic device is being played, or information 1115c indicating that a particular application (e.g., a fitness application) of the electronic device is running. Furthermore, for example, the electronic device 1400 may determine an object context that indicates a workout state when the second context information indicates the information 1115c indicating that a certain application (e.g., a fitness application) of the electronic device is running.

In an embodiment of the present disclosure, the electronic device 1400 may determine an object context based on at least one of the ratio between the width and the height of the region-of-interest image 1110, a first context or a second context 1113. As described in the aforementioned example, the electronic device 1400 may determine the object context not based on the ratio between the width and the height of the region-of-interest image 1110, the first context or the second context 1113 ,but also based on a combination thereof.

In an embodiment of the present disclosure, the electronic device 1400 may use a neural network or a table to determine the object context. For example, the electronic device 1400 may determine an object context by using an Al model trained with a data set including at least one of the ratio between the width and the height of the region-of-interest image, the first context or the second context as an input and the object context as an output. Furthermore, for example, based on a table including relationships between the at least one of the ratio of width and height of the region-of-interest image 1110, the first context or the second context and the object context, the electronic device 1400 may determine an object context.

The electronic device 1400 may determine the target training data 1120 corresponding to the object context from among the original training data. For example, when the object context indicates that the user is standing, the electronic device 1400 may determine training data corresponding to the standing state from among the original training data as target training data 1120b. In an embodiment of the present disclosure, the electronic device 1400 may determine the target training data 1120 based on the object context and the ratio between the width and the height of the region-of-interest image 1110. The electronic device 1400 may determine training data that corresponds to the object context, and has the same or similar ratio between width and height as the region-of-interest 1110, as the target training data 1120. For example, when the ratio between the width and the height of the region-of-interest image 1110a is larger than 4, and the object context indicates that the user is standing, the electronic device 1400 may select the target training data 1120b including a training image in which the user is standing, and in which the ratio between the width and the height is 4 or close to 4. As another example, when the ratio between the width and the height of the region-of-interest image 1110b is 2 and the object context indicates that the user is seated, the electronic device 1400 may select the target training data 1120a including a training image in which the user is seated, and which has the ratio between the width and the height being 2. In another example, when the ratio between the width and height of the region-of-interest image 1110c is 3 and the object context indicates that the user is working out, the electronic device 1400 may select the target training data 1120c including a training image of working out which has the ratio between the width and the height being 3.

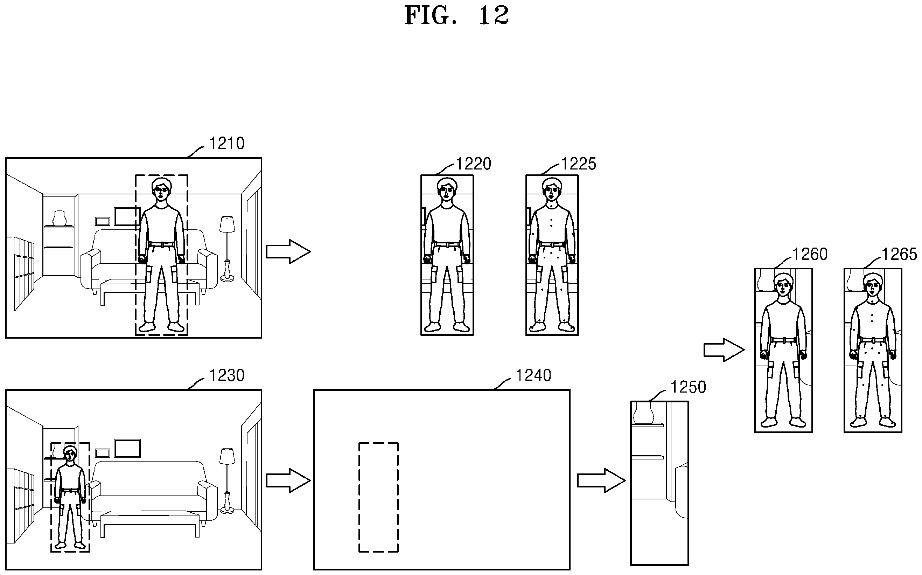

FIG. 12 is a diagram for describing a method of generating training data, according to an embodiment of the present disclosure.

Referring to FIG. 12, the electronic device 1400 according to an embodiment of the present disclosure may generate composite training data based on a first captured image 1210 and a second captured image 1230. The first captured image 1210 may be an image having a prediction confidence determined by an Al model being equal to or larger than a defined value among images captured by the electronic device 1400. For example, the electronic device 1400 may exclude images having the prediction confidence determined by the Al model being smaller than the defined value from among the captured images, and determine an image having a prediction confidence being equal to or larger than the defined value as the first captured image 1210. The second captured image 1230 may be an image including an identical object as in the first captured image 1210 and having a prediction confidence determined by the Al model being smaller than the defined value.

In an embodiment of the present disclosure, the electronic device 1400 may obtain the first captured image 1210. In an embodiment of the present disclosure, the electronic device 1400 may use an Al model to obtain an object image 1220 from the first captured image 1210. For example, the electronic device 1400 may determine a smallest rectangular image including the object included in the first captured image 1210 as the object image 1220. In an embodiment of the present disclosure, the electronic device 1400 may use an Al model to obtain predicted data 1225. For example, the predicted data 1225 may be output data obtained by inputting the first captured image 1210 to the Al model. For example, the electronic device 1400 may obtain the predicted data 1225 including an area where the object is present and a type of the object, which is output by inputting the first captured image 1210 to an Al model for object detection.

In an embodiment of the present disclosure, the electronic device 1400 may obtain the second captured image 1230. In an embodiment of the present disclosure, the electronic device 1400 may use an Al model to obtain a region of interest 1240 from the second captured image 1230. For example, the electronic device 1400 may obtain the region of interest 1240 based on a background image. In an embodiment of the present disclosure, the electronic device 1400 may obtain a region-of-interest image 1250 corresponding to the region of interest in the background image.

In an embodiment of the present disclosure, the electronic device 1400 may generate a composite training image 1260 based on the object image 1220 and the region-of-interest image 1250. For example, the electronic device 1400 may extract an object region in the object image 1220 and combine it with the region-of-interest image to generate the composite training image 1260. The electronic device 1400 may generate ground truth composite training data for an object, which may include the composite training image 1260 and the predicted data 1265.

The electronic device 1400 may generate training data for the object included in the first image 1210 and the second image 1230 by generating training data by using the object image obtained by an Al model based on an input image having a high confidence. The Al model may be trained with training data using an object included in the image captured by the electronic device 1400 to further increase the accuracy for an actual use environment of the Al model than with training data generated using an arbitrary object.

When there are a plurality of objects included in the image captured by the electronic device 1400, training data may be generated only for an object with low confidence according to the Al model among the plurality of objects. For example, when object A and object B appear on one or more images captured by the electronic device 1400, the electronic device 1400 may generate training data for object B with low confidence of the Al model among the captured images.

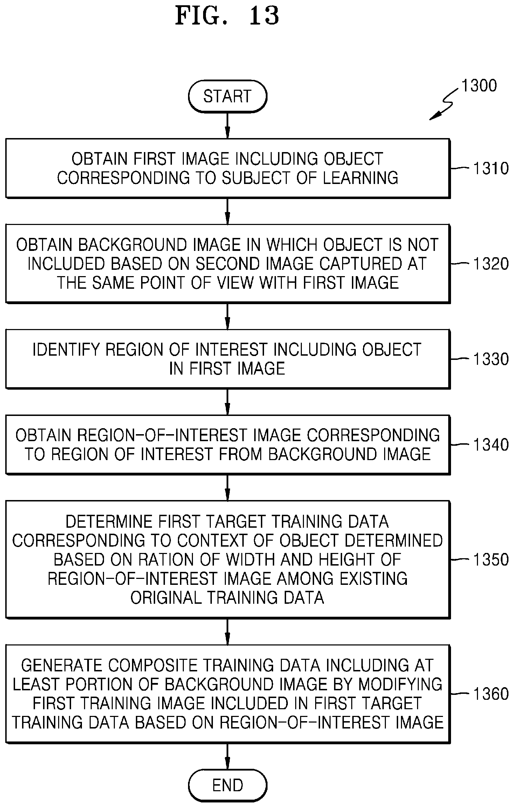

FIG. 13 is a flowchart for describing a method of generating training data, according to an embodiment of the present disclosure.

Referring to FIG. 13, a method 1300 of generating training data with which the electronic device 1400 trains an Al model according to an embodiment of the present disclosure begins with operation 1310.

At operation 1310, the electronic device 1400 may obtain a first image including an object corresponding to a subject of learning. For example, when the Al model is one for object detection, the term 'object' may refer to an object that may be detected by the Al model.

At operation 1320, the electronic device 1400 may ,obtain a background image where no object is included,, based on a second image captured at the same point of view with the first image. For example, the first image and the second image may be captured by one camera with the same view. For example, the first image and the second image may be captured by using a camera of the electronic device 1400 fixed at a position.

At operation 1330, the electronic device 1400 may identify a region of interest that includes an object in the first image. In an embodiment of the present disclosure, the electronic device 1400 may identify the region of interest based on the first image and the background image. For example, the electronic device 1400 may identify the region of interest by using a residual image about a difference between the first image and the background image.

At operation 1340, the electronic device 1400 may obtain a region-of-interest image corresponding to the region of interest from the background image. In an embodiment of the present disclosure, the electronic device 1400 may obtain the region-of-interest Image by extracting the region of interest from the background image.

At operation 1350, the electronic device 1400 may determine first target training data corresponding to a context of the object determined based on a ratio between a width and a height of the region-of-interest image from among existing original training data. For example, the first target training data may include training information and a training image corresponding to the context of the object. For example, the first target training data may include training information and a training image representing a standing state.

At operation 1360, the electronic device 1400 may generate composite training data including at least a portion of the background image by modifying a first training image included in the first target training data based on the region-of-interest image. In an embodiment of the present disclosure, the electronic device 1400 may generate a training image by combining the first training image included in the first target training data and the region-of-interest image. The composite training data may include a composite training image and training data.

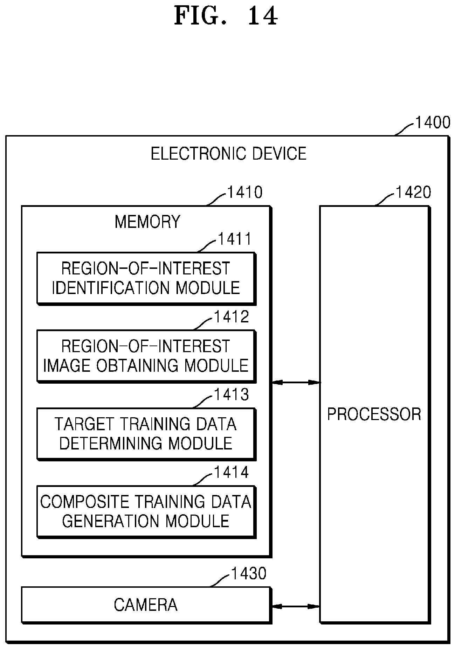

FIG. 14 is a block diagram for describing a configuration of an electronic device, according to an embodiment of the present disclosure.

Referring to FIG.14, the electronic device 1400 may include a memory 1410, a processor 1420, and a camera 1430, but embodiments are not limited thereto and a universal component may be further added thereto.

In an embodiment of the present disclosure, the memory 1410 may store a program for processes and control of the processor 1420, and store data input to or output from the electronic device 1400. Instructions, data structures, and program codes that are readable to the processor 1420 may be stored in the memory 1410. In embodiments of the present disclosure, the processor 1420 may be implemented by executing the instructions or codes of the program stored in the memory 1410.

In an embodiment of the present disclosure, the memory 1410 may include a flash memory type, a hard disk type, a multimedia card micro type, or a card type memory (e.g., secure digital (SD) or eXtreme digital (XD) memory), and may include a non-volatile memory including at least one of a read-only memory (ROM), an electrically erasable programmable ROM (EEPROM), a programmable ROM (PROM), a magnetic memory, a magnetic disc or an optical disc and a volatile memory such as a random access memory (RAM) or a static RAM (SRAM).

In an embodiment of the present disclosure, the memory 1410 may store one or more instructions and/or programs for controlling the electronic device 1400 for generating training data to perform the task. For example, the memory 1410 may store a region-of-interest identifier 1411, a region-of-interest image obtainer 1412, a target training data determiner 1413, a composite training data generator 1414, etc.

In an embodiment of the present disclosure, the processor 1420 may control an operation or function for the electronic device 1400 to perform a task by executing the instructions or a programmed software module stored in the memory 1410. The processor 1420 may include hardware components for performing arithmetic, logical, and input/output operations and signal processing. The processor 1420 may execute the one or more instructions stored in the memory 1410 to control general operations for the electronic device 1400 to perform a task of generating composite training data.

In an embodiment of the present disclosure, the processor 1420 may include at least one of e.g., a central processing unit (CPU), a microprocessor, a graphic processing unit (GPU), an application specific integrated circuit (ASIC), a digital signal processor (DSP), a digital signal processing device (DSPD), a programmable logic device (PLD), a field programmable gate array (FPGA), an application processor (AP), a neural processing unit (NPU) or an Al specific processor designed in a hardware structure specialized in processing of an Al model, without being limited thereto. Each processor included in the processor 1420 may be a dedicated processor for performing a certain function.

In an embodiment of the present disclosure, the Al processor may use the Al model to perform operation and control to handle a task configured to be performed by the electronic device 1400. The Al processor may be manufactured into the form of a dedicated hardware chip for Al, or manufactured as a portion of a universal processor (e.g., a CPU or an AP) or GPU and mounted in the electronic device 1400.

In an embodiment of the present disclosure, the processor 1420 may be configured to execute one or more instructions stored in the memory 1410 to obtain a first image including an object corresponding to a subject of learning. The processor 1420 may be configured to execute one or more instructions stored in the memory 1410 to obtain a background image in which the object is not included ,based on a second image captured at the same point of view with the first image. The processor 1420 may be configured to execute one or more instructions stored in the memory 1410 to identify a region of interest including an object in the first image. The processor 1420 may be configured to execute one or more instructions stored in the memory 1410 to obtain a region-of-interest image corresponding to the region of interest from the background image. The processor 1420 may be configured to execute one or more instructions stored in the memory 1410 to determine first target training data corresponding to a context of the object determined based on a ratio between a width and a height of the region-of-interest image from among existing original training data. The processor 1420 may be configured to execute one or more instructions stored in the memory 1410 to generate composite training data including at least a portion of the background image by modifying a first training image included in the first target training data based on the region-of-interest image.

In an embodiment of the present disclosure, the processor 1410 may execute one or more instructions stored in the memory 1410 to determine prediction accuracy of the Al model by using a first test image generated based on the first target training data and an image including a certain background, and a second test image generated based on the background image and the first target training data. The processor 1420 may be configured to execute one or more instructions stored in the memory 1410 to generate additional composite training data based on first prediction accuracy for the first test image and second prediction accuracy for the second test image.

In an embodiment of the present disclosure, the processor 1420 may be configured to execute one or more instructions stored in the memory 1410 to determine second target training data among the original training data based on the first prediction accuracy being equal to or larger than a defined value and the second prediction accuracy being smaller than the defined value. The processor 1420 may be configured to execute one or more instructions stored in the memory 1410 to generate additional composite training data by modifying a second training image included in the second target training data based on the region-of-interest image.

In an embodiment of the present disclosure, the processor 1420 may be configured to execute one or more instructions stored in the memory 1410 to obtain an additional region-of-interest image having the same height and width as the region-of-interest image from the background image based on the first and second prediction accuracies being smaller than the defined value. The processor 1420 may be configured to execute one or more instructions stored in the memory 1410 to generate additional composite training data by modifying a first training image based on the additional region-of-interest image.

In an embodiment of the present disclosure, the processor 1420 may be configured to execute one or more instructions stored in the memory 1410 to obtain at least one of color information and brightness information of the region-of-interest image. The processor 1420 may be configured to execute one or more instructions stored in the memory 1410 to modify at least one of a color or a brightness of the first training image based on at least one of the color information or the brightness information of the region-of-interest image. The processor 1420 may be configured to execute one or more instructions stored in the memory 1410 to generate composite training data by modifying modified first training image based on the region-of-interest image.

In an embodiment of the present disclosure, the processor 1420 may be configured to execute one or more instructions stored in the memory 1410 to obtain first context information regarding the region of interest based on the region-of-interest image. The processor 1420 may be configured to execute one or more instructions stored in the memory 1410 to obtain second context information about a state of the electronic device. The processor 1420 may be configured to execute one or more instructions stored in the memory 1410 to determine a context of the object based on the first context information, the second context information and the ratio between the width and the height of the background image. The processor 1420 may be configured to execute one or more instructions stored in the memory 1410 to determine first target training data corresponding to a context of the object among the original training data.

In an embodiment of the present disclosure, the processor 1420 may be configured to execute one or more instructions stored in the memory 1410 to obtain a residual image between the first image and the background image. The processor 1420 may be configured to execute one or more instructions stored in the memory 1410 to identify a region of interest based on the residual image.

In an embodiment of the present disclosure, the processor 1420 may be configured to execute one or more instructions stored in the memory 1410 to extract an object image corresponding to the object included in the first training image. The processor 1420 may be configured to execute one or more instructions stored in the memory 1410 to generate composite training data including the composite training image generated by combining the region-of-interest image and the object image.

In an embodiment of the present disclosure, the processor 1420 may be configured to execute one or more instructions stored in the memory 1410 to generate a ground truth composite training image based on the object image and the background image. The processor 1420 may be configured to execute one or more instructions stored in the memory 1410 to obtain predicted data regarding an object included in a third image by inputting the third image to the Al model. The processor 1420 may be configured to execute one or more instructions stored in the memory 1410 to generate ground truth composite training data for the object based on the ground truth composite training image and the predicted data.

In an embodiment, the camera 1430 may obtain video and/or images by image-capturing the object. In an embodiment of the present disclosure, the camera 1430 may be fixed at a certain position and perform image capturing. The camera 1430 may include, for example, an RGB camera, a telecamera, a wide-angle camera, ultra wide-angle camera, etc., without being limited thereto. The camera 1430 may obtain a video including a plurality of frames. A detailed type and function of the camera 1430 may be clearly inferred by those of ordinary skill in the art, so the description thereof may be omitted.

In the meantime, embodiments of the present disclosure may be implemented in the form of a recording medium that includes computer-executable instructions such as the program modules executed by the computer. Computer-readable mediums may be an arbitrarily available medium that may be accessed by the computer, including volatile, non-volatile, removable, and non-removable mediums. The computer-readable medium may also include a computer storage medium and a communication medium. The computer storage medium includes all the volatile, non-volatile, removable, and non-removable mediums implemented by an arbitrary method or technology for storage of information, such as computer-readable instructions, data structures, program modules, or other data. The communication medium may include other data of modulated data signals such as computer-readable instructions, data structures, or program modules.

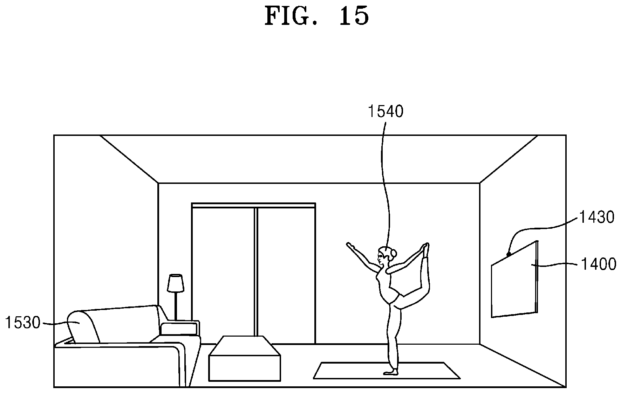

FIG. 15 is a flowchart for describing a method of generating training data, according to an embodiment of the present disclosure.

Referring to FIG. 15, the electronic device 1400 according to an embodiment of the present disclosure may be a TV, but embodiments are not limited thereto and may be various electronic devices.

In an embodiment of the present disclosure, the electronic device 1400 may use the camera 1430 to capture an image of an indoor space. The image captured by the camera 1430 may include a sofa 1530 and a person 1540 who is working out.

In an embodiment of the present disclosure, the electronic device 1400 may use the camera 1430 to activate or deactivate the function of capturing an image of the indoor space. The electronic device 1400 may capture an image when performing a certain task. For example, the electronic device 1400 may capture an image only while performing a health application. Because a region-of-interest image identified when a certain task is performed is used in generating training data based on an image captured when the electronic device 1400 is performing the certain task, prediction accuracy of the Al model may be high.

In an embodiment of the present disclosure, the electronic device 1400 may use an Al model for human being's pose estimation. The electronic device 1400 may use a different Al model depending on the task to be performed. For example, the electronic device 1400 may use the Al model for human being's pose estimation while running a health application and use an Al model for object detection while in standby mode. The electronic device 1400 may generate different types of training data depending on the Al model being used. For example, when the Al model is for estimating a pose of the human being, the training data generated by the electronic device 1400 may be training data for learning with respect to human being's pose estimation.

The electronic device 1400 may obtain a background image based on the captured image. The electronic device 1400 may generate the background image based on the captured image by using a method of generating a background as described with reference to FIGS. 1, 2A, 2B and 13. In an embodiment of the present disclosure, the electronic device 1400 may generate a background image at certain time intervals. For example, the electronic device 1400 may generate a background image at intervals (e.g., 30 minutes, 3 hours, etc.) different from an image capturing interval. The electronic device 1400 may generate a background image based on all or part of the captured image at certain time intervals. For example, the electronic device 1400 may determine some of the images captured at certain time intervals, and generate a background image based on the determined images. In an embodiment of the present disclosure, the electronic device 1400 may generate a background image each time an image is captured.

The electronic device 1400 may obtain a region-of-interest image based on the captured image and the background image. The electronic device 1400 may obtain a region-of-interest image based on the captured image and the background image by using a method of generating a region-of-interest image as described with reference to FIGS. 1, 3, 4 and 13.

The electronic device 1400 may determine target training data based on the region-of-interest Image. In an embodiment of the present disclosure, the electronic device 1400 may determine the target training data by considering a context. For example, when the electronic device 1400 is running a workout program, it may determine an object context indicating that the user is working out. For example, when the electronic device 1400 is running a yoga program among the workout programs, it may determine an object context indicating that the user is practicing yoga. The electronic device 1400 may determine target training data based on the object context indicating that the user is working out or practicing yoga.

The electronic device 1400 may generate composite training data based on the region-of-interest image and the target training data. The electronic device 1400 may generate the composite training data based on the region-of-interest image and the target training data by using a method of generating composite training data as described with reference to FIGS. 1 and 7.

In an embodiment of the present disclosure, the electronic device 1400 may generate the composite training data in a particular condition. For example, the electronic device 1400 may not generate the composite training data when the particular condition is not satisfied even during image capturing with the camera 1430. For example, the electronic device 1400 may generate the composite training data when the user is doing a certain operation (e.g., user information registration or gesture control). In those examples, the electronic device 1400 may identify a region of interest or generate a background image only when the particular condition is satisfied apart from whether it is performing image capturing.

In an embodiment of the present disclosure, when prediction confidence of the Al model is low, the electronic device 1400 may generate composite data. For example, even though periodically obtaining the captured image, the electronic device 1400 may not generate the composite training data when the prediction confidence of the Al model is identified to be high, and may generate the composite training data when the prediction confidence is identified to be low. The prediction confidence may refer to a score or probability of the Al model being sure of the prediction corresponding to an input image. For example, as for an Al model regarding an object classification, prediction confidence about each object that may be classified by the Al model may refer to a probability or score that the Al model predicts each object with an output corresponding to an input image. For example, the prediction confidence about the "human being" may refer to a probability of score of the Al model determining a prediction corresponding to an input image as a "human being".

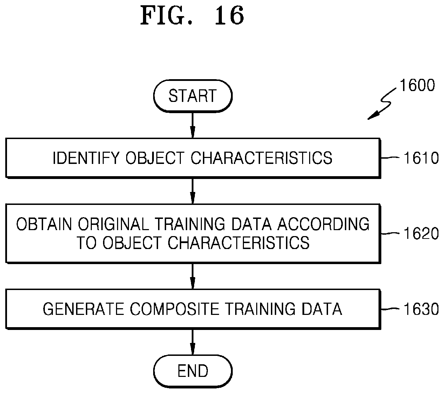

FIG. 16 is a diagram for describing a procedure for generating training data to use an Al model, according to an embodiment of the present disclosure.

Referring to FIG. 16, a method 1600 by which the electronic device 1400 generates composite training data according to an embodiment of the present disclosure begins with operation 1610.

At operation, 1610, the electronic device 1400 may identify object characteristics. For example, the electronic device 1400 may identify characteristics (e.g., type, age, gender, etc.) of an object included in a captured image. In an embodiment of the present disclosure, the electronic device 1400 may use object analysis to identify characteristics of the object. For example, the electronic device 1400 may use an Al model having an input of a captured image, and an output of characteristics of the object included in the input image, to identify characteristics of the object.

In an embodiment of the present disclosure, the electronic device 1400 may use object recognition or object classification to identify characteristics of the object. For example, the electronic device 1400 may use object recognition or object classification to identify an object included in a captured image, and identify characteristics of the object by determining the characteristics of the identified object.

At operation 1620, the electronic device 1400 may obtain training data according to the characteristics of the object. For example, when the object is a middle-aged black man, the electronic device 1400 may obtain original training data corresponding to the skin type, age and gender.

At operation 1630, the electronic device 1400 may generate composite training data based on the original training data obtained according to the object characteristics. A method by which the electronic device 1400 uses the original training data to generate composite training data was described above, so the description will not be repeated. The electronic device 1400 may generate composite training data similar to the object by obtaining original training data similar to the user or the target object.

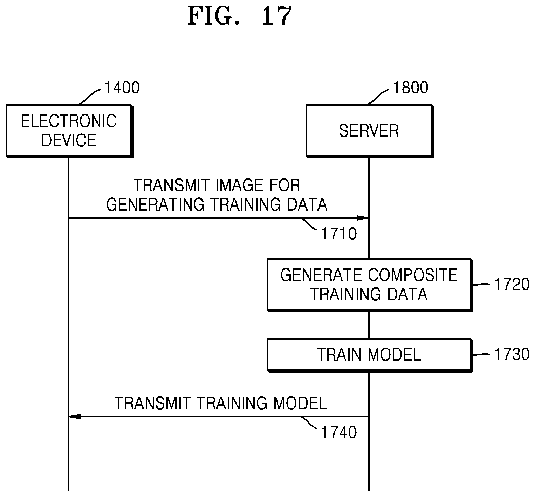

FIG. 17 is a sequence diagram for describing a method of generating training data by using an electronic device and a server, according to an embodiment of the present disclosure.

Referring to FIG. 17, a server 1800 may generate composite training data based on information obtained through the electronic device 1400.

At operation 1710, the electronic device 1400 may transmit an image for generating composite training data to the server 1800. The image for generating composite training data may be at least one of an image captured by the electronic device 1400, a background image or a region-of-interest image.

At operation 1720, the server 1800 may generate composite training data. For example, when the server 1800 receives the region-of-interest image, it may combine it with the original training data to generate composite training data.

At operation 1730, the server 1800 may train the Al model based on the composite training data. At operation 1740, the server 1800 may transmit the trained Al model to the electronic device 1400.

In an embodiment, the server 1800 may send the composite training data to the electronic device 1400, and the electronic device 1400 may train the Al model with the received composite training data.

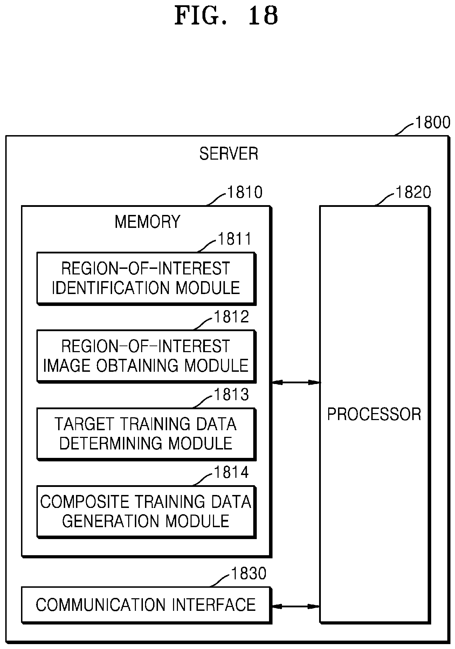

FIG. 18 is a block diagram for describing a configuration of a server, according to an embodiment of the present disclosure.

Referring to FIG.18, the server 1800 may include a memory 1810, a processor 1820, and a communication interface 1830, but embodiments are not limited thereto and a universal component may be further added thereto.

In an embodiment, the memory 1810 may store a program for processes and control of the processor 1820, and store data input to or output from the server 1800. Instructions, data structures, and program codes that are readable to the processor 1820 may be stored in the memory 1810. In embodiments of the present disclosure, the processor 1820 may be implemented by executing the instructions or codes of the program stored in the memory 1810.

In an embodiment of the present disclosure, the memory 1810 may include a flash memory type, a hard disk type, a multimedia card micro type, or a card type memory (e.g., secure digital (SD) or eXtreme digital (XD) memory), and may include a non-volatile memory including at least one of a read-only memory (ROM), an electrically erasable programmable ROM (EEPROM), a programmable ROM (PROM), a magnetic memory, a magnetic disc or an optical disc and a volatile memory such as a random access memory (RAM) or a static RAM (SRAM).

In an embodiment, the memory 1810 may store one or more instructions and/or programs for controlling the server 1800 to perform a task of generating training data. For example, the memory 1810 may store a region-of-interest identifier 1811, a region-of-interest image obtainer 1812, a target training data determiner 1813, a composite training data generator 1814, etc.

In an embodiment of the present disclosure, the processor 1820 may control an operation or function for the server 1800 to perform the task by executing the instructions or a programmed software module stored in the memory 1810. The processor 1820 may include hardware components for performing arithmetic, logical, and input/output operations and signal processing. The processor 1820 may execute the one or more instructions stored in the memory 1810 to control general operations for the server 1800 to perform a task of generating composite training data.

In an embodiment of the present disclosure, the processor 1820 may include at least one of e.g., a central processing unit (CPU), a microprocessor, a graphic processing unit (GPU), an application specific integrated circuit (ASIC), a digital signal processor (DSP), a digital signal processing device (DSPD), a programmable logic device (PLD), a field programmable gate array (FPGA), an application processor (AP), a neural processing unit (NPU) or, an Al specific processor designed in a hardware structure specialized in processing of an Al model, without being limited thereto. Each processor included in the processor 1820 may be a dedicated processor for performing a certain function.

In an embodiment, the Al processor may use the Al model to perform operation and control to handle a task configured to be performed by the server 1800. The Al processor may be manufactured into the form of a dedicated hardware chip for Al, or manufactured as a portion of a universal processor (e.g., a CPU or an AP) or GPU and mounted in the server 1800.

In an embodiment of the present disclosure, the processor 1820 may be configured to execute one or more instructions stored in the memory 1810 to obtain a first image including an object corresponding to a subject of learning. The processor 1820 may be configured to execute one or more instructions stored in the memory 1810 to obtain a background image in which the object is not included based on a second image captured at the same point of view with the first image. The processor 1820 may be configured to execute one or more instructions stored in the memory 1810 to identify a region of interest including the object in the first image. The processor 1820 may be configured to execute one or more instructions stored in the memory (1810) to obtain a region-of-interest image corresponding to the region of interest from the background image. The processor 1820 may be configured to execute one or more instructions stored in the memory 1810 to determine first target training data corresponding to a context of the object determined based on a ratio between a width and a height of the region-of-interest image among existing original training data items. The processor 1820 may be configured to execute one or more instructions stored in the memory 1810 to generate composite training data including at least a portion of the background image by modifying a first training image included in the first target training data based on the region-of-interest image.

In an embodiment of the present disclosure, the processor 1820 may execute one or more instructions stored in the memory 1810 to determine prediction accuracy of the Al model by using a first test image generated based on the first target training data and an image including a certain background, and a second test image generated based on the background image and the first target training data. The processor 1820 may be configured to execute one or more instructions stored in the memory 1810 to generate additional composite training data based on first prediction accuracy for the first test image and second prediction accuracy for the second test image.

In an embodiment of the present disclosure, the processor 1820 may be configured to execute one or more instructions stored in the memory 1810 to determine second target training data among the original training data based on the first prediction accuracy being equal to or larger than a defined value and the second prediction accuracy being smaller than the defined value. The processor 1820 may be configured to execute one or more instructions stored in the memory 1810 to generate additional composite training data by modifying a second training image included in the first target training data based on the region-of-interest image.

In an embodiment of the present disclosure, the processor 1820 may be configured to execute one or more instructions stored in the memory 1810 to obtain an additional region-of-interest image having the same height and width as the region-of-interest image from the background image based on the first and second prediction accuracies being smaller than the defined value. The processor 1820 may be configured to execute one or more instructions stored in the memory 1810 to generate additional composite training data by modifying a first training image based on the additional region-of-interest image.

In an embodiment of the present disclosure, the processor 1820 may be configured to execute one or more instructions stored in the memory 1810 to obtaAt least one of color information and brightness information of the region-of-interest image. The processor 1820 may be configured to execute one or more instructions stored in the memory 1810 to modify at least one of a color or a brightness of the first training image based on at least one of the color information or the brightness information of the region-of-interest image. The processor 1820 may be configured to execute one or more instructions stored in the memory 1810 to generate composite training data by modifying a modified first training image based on the region-of-interest image.

In an embodiment of the present disclosure, the processor 1820 may be configured to execute one or more instructions stored in the memory 1810 to obtain first context information regarding the region of interest based on the region-of-interest image. The processor 1820 may be configured to execute one or more instructions stored in the memory 1810 to obtain second context information about a state of the electronic device. The processor 1820 may be configured to execute one or more instructions stored in the memory 1810 to determine a context of the object based on the first context information, the second context information and the ratio between the width and the height of the background image. The processor 1820 may be configured to execute one or more instructions stored in the memory 1810 to determine first target training data corresponding to a context of the object among the original training data.

In an embodiment of the present disclosure, the processor 1820 may be configured to execute one or more instructions stored in the memory 1810 to obtain a residual image between the first image and the background image. The processor 1820 may be configured to execute one or more instructions stored in the memory 1810 to identify a region of interest based on the residual image.

In an embodiment of the present disclosure, the processor 1820 may be configured to execute one or more instructions stored in the memory 1810 to extract an object image corresponding to the object included in the first training image. The processor 1820 may be configured to execute one or more instructions stored in the memory 1810 to generate composite training data including a composite training image generated by combining the region-of-interest image and the object image.

In an embodiment of the present disclosure, the processor 1820 may execute the one or more instructions stored in the memory 1810 to train the Al model based on the composite training data. The processor 1820 may be configured to execute one or more instructions stored in the memory 1810 to use the communication interface 1830 to transmit the trained Al model to an external electronic device.

In an embodiment of the present disclosure, the processor 1820 may execute the one or more instructions stored in the memory 1810 to use the Al model to generate ground truth training data for the object from the first image. Ground truth composite training image may be generated based on the object image and the background image. The processor 1820 may be configured to execute one or more instructions stored in the memory 1810 to generate the ground truth composite training data based on the ground truth training image and the background image. By inputting a third image to the Al model, predicted data for an object included in the third image may be obtained. The processor 1820 may be configured to execute one or more instructions stored in the memory 1810 to generate ground truth composite training data for the object based on the ground truth composite training image and the predicted data.

The communication interface 1830 may include a communication circuit. The communication interface 1830 may include the communication circuit that may perform data communication between the server 1800 or other devices by using at least one of data communication schemes including, for example, a wireless local area network (WLAN), Wi-Fi, bluetooth, zigbee, Wi-Fi Direct (WFD), infrared data association (IrDA), bluetooth low energy (BLE), near field communication (NFC), wireless broadband Internet (Wibro), world interoperability for microwave access (WiMAX), shared wireless access protocol (SWAP), wireless gigabit alliance (WiGig) and radio frequency (RF) communication.

The communication interface 1830 may transmit or receive data of the server 1800 for generating training data to or from the external electronic device. For example, the communication interface 1830 may transmit or receive Al models used by the server 1800, or transmit or receive the Al models or the region-of-interest image to or from the external electronic device.

The machine-readable storage medium may be provided in the form of a non-transitory storage medium. The term 'non-transitory storage medium' may mean a tangible device without including a signal, e.g., electromagnetic waves, and may not distinguish between storing data in the storage medium semi-permanently and temporarily. For example, the non-transitory storage medium may include a buffer that temporarily stores data.

In an embodiment of the present disclosure, the aforementioned method according to the various embodiments of the present disclosure may be provided in a computer program product. The computer program product may be a commercial product that may be traded between a seller and a buyer. The computer program product may be distributed in the form of a machine-readable storage medium (e.g., a CD-ROM) or distributed directly between two user devices (e.g., smart phones) or online (e.g., downloaded or uploaded). In the case of the online distribution, at least part of the computer program product (e.g., a downloadable app) may be at least temporarily stored or arbitrarily created in a storage medium that may be readable to a device such as a server of the manufacturer, a server of the application store, or a relay server.

According to an aspect of the present disclosure, provided is a method of generating training data for training of an Al model. The method of generating the training data may include obtaining a first image including an object corresponding to a subject of learning. The method of generating the training data may include obtaining a background image where the object is not included ,based on a second image captured at the same point of view with the first image. The method of generating the training data may include identifying a region of interest including the object in the first image. The method of generating the training data may include obtaining a region-of-interest image corresponding to the region of interest from a background image. The method of generating the training data may include determining first target training data corresponding to a context of the object determined based on the ratio between the width and the height of the region-of-interest image among existing original training data. The method of generating the training data may include generating composite training data including at least a portion of the background image by modifying a first training image included in the first target training data based on the region-of-interest image.

In an embodiment of the present disclosure, a method of generating training data may include determining prediction accuracy of the Al model by using a first test image generated based on first target training data and an image including a certain background, and a second test image generated based on the background image and the first target training data. The method of generating training data may include generating additional composite training data based on first prediction accuracy for the first test image and second prediction accuracy for the second test image.

In an embodiment of the present disclosure, the generating of the additional composite training data may include determining second target training data among original training data based on the first prediction accuracy being equal to or larger than a defined value and the second prediction accuracy being smaller than the defined value. The generating of the additional composite training data may include generating the additional composite training data by modifying a second training image included in the second target training data based on a region-of-interest image.

In an embodiment of the present disclosure, the generating of the additional composite training data may include obtaining an additional region-of-interest image having the same height and width as the region-of-interest image from the background image based on the first and second prediction accuracies being smaller than a defined value. The generating of the additional composite training data may include generating the additional composite training data by modifying a first training image based on an additional region-of-interest image.

In an embodiment of the present disclosure, the generating of the composite training data may include obtaining at least one of color information or brightness information of the region-of-interest image. The generating of the composite training data may include modifying at least one of a color or a brightness of the first training image based on at least one of the color information or the brightness information of the region-of-interest image. The generating of the composite training data may include generating the composite training data by modifying a modified first training image based on the region-of-interest image.

In an embodiment of the present disclosure, the determining of the first target training data may include obtaining first context information regarding the region of interest based on the region-of-interest image. The determining of the first target training data may include obtaining second context information about a state of the electronic device. The determining of the first target training data may include determining a context of an object based on the first context information, the second context information and a ratio between the width and the height of the background image. The determining of the first target training data may include determining the first target training data corresponding to the context of the object among the original training data.

In an embodiment of the present disclosure, the identifying of the region of interest may include obtaining a residual image between the first image and the background image. The identifying of the region of interest may include identifying the region of interest based on the residual image.

In an embodiment of the present disclosure, the generating of the composite training data may include extracting an object image corresponding to an object included in the first training image. The generating of the composite training data may include generating the composite training data that includes a composite training image generated by combining the region-of-interest image and the object image.

In an embodiment of the present disclosure, the method of generating training data may include a ground truth composite training image based on the object image and the background image. The method of generating training data may include obtaining predicted data about an object included in a third image by inputting the third image to the Al model. The method of generating training data may include generating ground truth composite training data for the object based on the ground truth composite training image and the predicted data.

In an embodiment of the present disclosure, the Al model may include at least one of a pose estimation model, an object detection model or an object classification model. The object may include at least one of a human being, an animal or a thing.

According to an aspect of the present disclosure, provided is a computer-readable computer medium storing a program for performing the aforementioned method.

According to an aspect of the present disclosure, provided is an electronic device 1400 for generating composite training data. The electronic device 1400 may include a memory 1410 and at least one processor 1420. The at least one processor 1420 may be configured to execute one or more instructions stored in the memory 1410 to obtain a first image including an object corresponding to a subject of learning. The at least one processor 1420 may be configured to execute one or more instructions stored in the memory 1410 to obtain a background image in which the object is not included based on a second image captured at the same point of view with the first image. The at least one processor 1420 may be configured to execute one or more instructions stored in the memory 1410 to identify a region of interest including the object in the first image. The at least one processor 1420 may be configured to execute one or more instructions stored in the memory 1410 to obtain a region-of-interest image corresponding to the region of interest from the background image. The at least one processor 1420 may be configured to execute one or more instructions stored in the memory 1410 to determine first target training data corresponding to a context of the object determined based on a ratio between the width and the height of the region-of-interest image among existing original training data. The at least one processor 1420 may be configured to execute one or more instructions stored in the memory 1410 to generate composite training data including at least a portion of the background image by modifying a first training image included in the first target training data based on the region-of-interest image.

In an embodiment of the present disclosure, the at least one processor 1410 may execute one or more instructions stored in the memory 1410 to determine prediction accuracy of the Al model by using a first test image generated based on the first target training data and an image including a certain background, and a second test image generated based on the background image and the first target training data. The at least one processor 1420 may be configured to execute one or more instructions stored in the memory 1410 to generate additional composite training data based on first prediction accuracy for the first test image and second prediction accuracy for the second test image.

In an embodiment of the present disclosure, the at least one processor 1420 may be configured to execute one or more instructions stored in the memory 1410 to determine second target training data among original training data based on the first prediction accuracy being equal to or larger than a defined value and the second prediction accuracy being smaller than the defined value. The at least one processor 1420 may be configured to execute one or more instructions stored in the memory 1410 to generate additional composite training data by modifying a second training image included in the second target training data based on the region-of-interest image.

In an embodiment of the present disclosure, the at least one processor 1420 may be configured to execute one or more instructions stored in the memory 1410 to obtain an additional region-of-interest image having the same height and width as the region-of-interest image from the background image based on the first and second prediction accuracies being smaller than the defined value. The at least one processor 1420 may be configured to execute one or more instructions stored in the memory 1410 to generate additional composite training data by modifying a first training image based on the additional region-of-interest image.

In an embodiment of the present disclosure, the at least one processor 1420 may be configured to execute one or more instructions stored in the memory 1410 to obtain at least one of color information and brightness information of the region-of-interest image. The at least one processor 1420 may be configured to execute one or more instructions stored in the memory 1410 to modify at least one of a color or a brightness of the first training image based on at least one of the color information or the brightness information of the region-of-interest image. The at least one processor 1420 may be configured to execute one or more instructions stored in the memory 1410 to generate composite training data by modifying a modified first training image based on the region-of-interest image.

In an embodiment of the present disclosure, the at least one processor 1420 may be configured to execute one or more instructions stored in the memory 1410 to obtain first context information regarding the region of interest based on the region-of-interest image. The at least one processor 1420 may be configured to execute one or more instructions stored in the memory 1410 to obtain second context information about a state of the electronic device. The at least one processor 1420 may be configured to execute one or more instructions stored in the memory 1410 to determine a context of the object based on the first context information, the second context information and the ratio between the width and the height of the background image. The at least one processor 1420 may be configured to execute one or more instructions stored in the memory 1410 to determine first target training data corresponding to a context of the object among original training data.

In an embodiment of the present disclosure, the at least one processor 1420 may be configured to execute one or more instructions stored in the memory 1410 to obtain a residual image between the first image and the background image. The at least one processor 1420 may be configured to execute one or more instructions stored in the memory 1410 to identify a region of interest based on the residual image.

In an embodiment of the present disclosure, the at least one processor 1420 may be configured to execute one or more instructions stored in the memory 1410 to extract an object image corresponding to the object included in the first training image. The at least one processor 1420 may be configured to execute one or more instructions stored in the memory 1410 to generate composite training data including a composite training image generated by combining the region-of-interest image and the object image.

In an embodiment of the present disclosure, the at least one processor 1420 may be configured to execute one or more instructions stored in the memory 1410 to generate a ground truth composite training image based on the object image and the background image. The at least one processor 1420 may be configured to execute one or more instructions stored in the memory 1410 to obtain predicted data regarding an object included in a third image by inputting the third image to an Al model. The at least one processor 1420 may be configured to execute one or more instructions stored in the memory 1410 to generate ground truth composite training data for the object based on the ground truth composite training image and the predicted data.

In an embodiment of the present disclosure, the Al model may include at least one of a pose estimation model, an object detection model or an object classification model. The object may include at least one of a human being, an animal or a thing.

## Claims

1. A method of generating training data for training an artificial intelligence (AI) model, the method comprising:
obtaining a first image including an object corresponding to a subject of learning;
obtaining a background image in which the object is not included based on a second image, captured at a same point of view as the first image;
identifying a region of interest including the object in the first image;
obtaining a region-of-interest image corresponding to the region of interest from the background image;
determining first target training data corresponding to a context of the object from among existing original training data, determined based on a ratio between a width and a height of the region-of-interest image; and
generating composite training data including at least a portion of the background image by modifying a first training image included in the first target training data based on the region-of-interest image.

2. The method of claim 1, further comprising:
determining prediction accuracy of the Al model by usinga first test image generated based on the first target training data and an image including a certain background, and a second test image generated based on the background image and the first target training data; and
generating additional composite training data based on first prediction accuracy for the first test image and second prediction accuracy for the second test image.

3. The method of claim 2, wherein the generating of the additional composite training data comprises:
based on the first prediction accuracy being equal to or greater than a defined value and the second prediction accuracy being less than the defined value,determining second target training data among the original training data; and
generating the additional composite training data by modifying a second training image included in the second target training data based on the region-of-interest image.

4. The method of any of claims 2 and 3, wherein the generating of the additional composite training data comprises:
based on the first prediction accuracy and the second prediction accuracy being less than a defined value, obtaining an additional region-of-interest image from the background image, wherein a height and a width of the additional region-of-interest image is same as the height and the width of the region-of-interest image; and
generating the additional composite training data by modifying the first training image based on the additional region-of-interest image.

5. The method of any of claims 1 to 4, wherein the generating of the composite training data comprises:
obtaining at least one of color information or brightness information of the region-of-interest image;
modifying at least one of a color of the first training image or a brightness of the first training image based on the at least one of the color information or the brightness information of the region-of-interest image; and
generating the composite training data by modifying the modified first training image based on the region-of-interest image.

6. The method of any of claims 1 to 5, wherein the determining of the first target training data comprises:
obtaining first context information about the region of interest based on the region-of-interest image;
obtaining second context information about a state of an electronic device;
determining a context of the object based on the first context information, the second context information, and a ratio between a width and a height of the background image; and
determining the first target training data corresponding to from among the context of the object among the original training data.

7. The method of any of claims 1 to 6, wherein the identifying of the region of interest comprises:
obtaining a residual image between the first image and the background image; and
identifying the region of interest based on the residual image.

8. The method of any of claims 1 to 7, wherein the generating of the composite training data comprises:
extracting an object image corresponding to the object included in the first training image; and,
generating the composite training data comprises a composite training image generated by combining the region-of-interest image and the object image.

9. The method of any of claims 1 to 8, further comprising:
obtaining a third image including the object;
obtaining an object image of the object from the third image;
generating a ground truth composite training image based on the object image and the background image;
obtaining predicted data for the object included in the third image by inputting the third image to the Al model; and
generating ground truth composite training data for the object based on the ground truth composite training image and the predicted data.

10. The method of any of claims 1 to 9, wherein the Al model comprises at least one of a pose estimation model, an object detection model or, an object classification model, and
wherein the object comprises at least one of a human being, an animal or, a thing.

11. An electronic device for generating training data for training an artificial intelligence (AI) model, the electronic device comprising:
at least one processor (1420); and
a memory (1410) storing at least one instruction,
wherein the at least one processor (1420) is configured to execute the at least one instruction to:
obtain a first image including an object corresponding to a subject of learning,
obtain a background image in which the object is not included based on a second image, captured at a same point of view as the first image,
identify a region of interest including the object in the first image,
obtain a region-of-interest image corresponding to the region of interest from the background image,
determine first target training data corresponding to a context of the object from among existing original training data,determined based on a ratio between a width and a height of the region-of-interest image, and
generate composite training data including at least a portion of the background image by modifying a first training image included in the first target training data based on the region-of-interest image.

12. The electronic device of claim 11, wherein the at least one processor (1420) is configured to execute the at least one instruction to:
determine prediction accuracy of the Al model by usinga first test image generated based on the first target training data and an image including a certain background, and a second test image generated based on the background image and the first target training data, and
generate additional composite training data based on first prediction accuracy for the first test image and second prediction accuracy for the second test image.

13. The electronic device of claim 12, wherein the at least one processor (1420) is configured to execute the at least one instruction to:
based on the first prediction accuracy being equal to or greater than a defined value and the second prediction accuracy being less than the defined value,determine second target training data among the original training data, and
generate the additional composite training data by modifying a second training image included in the second target training data based on the region-of-interest image.

14. The electronic device of any of claims 12 and 13, wherein the at least one processor (1420) is configured to execute the at least one instruction to:
based on the first prediction accuracy and the second prediction accuracy being less than a defined value, obtain an additional region-of-interest image from the background image, wherein the additional region-of-interest image has the height and the width of the region-of-interest image, and
generate the additional composite training data by modifying the first training image based on the additional region-of-interest image.

15. A computer-readable recording medium having a program stored thereon for carrying out the method of any of claims 1 to 10.
